# EUROPEAN PATENT APPLICATION

(11) **EP 4 554 174 A1**
(43) Date of publication of application: **14.05.2025**
(21) Application number: 23858649.9
(22) Date of filing: 03.04.2023
(51) Int. Cl.: H04L 41/5041

(54) **METHOD, APPARATUS AND SYSTEM FOR EXECUTING NETWORK MANAGEMENT SERVICE INTENTION**

(30) Priority: 30.08.2022 CN 202211057201
(71) Applicant: Huawei Technologies Co., Ltd., Shenzhen, Guangdong 518129 (CN)
(72) Inventor: LI, Yexing, Shenzhen, Guangdong 518129 (CN); YU, Yijun, Shenzhen, Guangdong 518129 (CN)
(74) Representative: Körber, Martin Hans
(86) International application number: PCT/CN2023/085897
(87) International publication number: WO 2024/045608

(57) **Abstract**

This application provides a network management service intent execution method, an apparatus, and a system. The method includes: A network management service production network element receives first service indication information from a network management service consumption network element. The first service indication information indicates a first network object, a first performance indicator range, and first tolerable unfulfilled duration for a network management service intent. The network management service production network element determines a first target management action group based on the first service indication information, to execute the network management service intent. During a period in which the first target management action group is applied to the first network object, the first target management action group is used to enable duration in which a performance indicator value of the first network object is not within the first performance indicator range to be less than or equal to the first tolerable unfulfilled duration. This solution can enable the network management service production network element to provide a higher-quality network management service.

## Description

This application claims priority to Chinese Patent Application No. 202211057201.6, filed with the China National Intellectual Property Administration on August 30, 2022 and entitled "NETWORK MANAGEMENT SERVICE INTENT EXECUTION METHOD, APPARATUS, AND SYSTEM", which is incorporated herein by reference in its entirety.

### TECHNICAL FIELD

This application relates to the field of communication technologies, and more specifically, to a network management service intent execution method, an apparatus, and a system.

### BACKGROUND

Currently, in an intent-driven network management system, a network management service consumption network element may request a network management service production network element to execute a network management service intent, so that when executing the network management service intent, the network management service production network element can enable a performance indicator of a specified network object to reach a target range. For example, the network management service consumption network element requests the network management service production network element to run a network management service intent used to control an average throughput of a base station in an area of a city. An intent objective of the network management service intent is to ensure that the average throughput of the base station in the area of the city is always greater than a target value. Therefore, the network management service production network element may configure information about a management action group on the base station in the area of the city, so that the average throughput is always greater than the target value. Usually, at least one management action group may be configured for one network management service intent. The network management service production network element randomly selects one management action group from the at least one management action group for execution. In a process in which the network management service intent is applied to the specified network object, if the network management service intent is not met (in other words, the performance indicator of the specified network object is not within the target range), for example, the average throughput falls below the target value in an execution process, the network management service production network element may randomly select one management action group for execution again, but a case in which the network management service intent is not met may still occur. Such a mechanism may result in that the network management service intent is not met for a long time, and consequently, quality of a network management service is reduced.

How to better execute the network management service intent of the network management service consumption network element, and enable the network management service production network element to provide a higher-quality network management service is a technical problem that needs to be resolved.

### SUMMARY

This application provides a network management service intent execution method, an apparatus, and a system, to enable a network management service intent of a network management service consumption network element to be better executed, and enable a network management service production network element to provide a higher-quality network management service.

According to a first aspect, an intent execution method is provided. The method may be executed by a network management service production network element or a chip in the network management service production network element. The method includes: The network management service production network element receives first service indication information from a network management service consumption network element. The first service indication information indicates a first network object, a first performance indicator range, and first tolerable unfulfilled duration for a network management service intent. The network management service production network element determines a first target management action group based on the first service indication information, to execute the network management service intent. During a period in which the first target management action group is applied to the first network object, the first target management action group is used to enable duration in which a performance indicator value of the first network object is not within the first performance indicator range to be less than or equal to the first tolerable unfulfilled duration.

It should be noted that the network management service intent may also be referred to as an intent (intent) for short, and the network management service intent and the intent may be used to represent a same meaning. In the following descriptions, the network management service intent is sometimes referred to as the intent for short. Details are not described below.

It should be further noted that the intent may include a network object and a performance indicator range. The network object and the performance indicator range may refer to an intent expectation of the intent. For example, the network object and the performance indicator range may be two attributes in the intent expectation. In the following, sometimes, for ease of use, the network object and the performance indicator range are collectively referred to as the intent expectation. For example, modifying the intent expectation may refer to changing the network object, may refer to changing the performance indicator range, or may refer to changing both the network object and the performance indicator range. Details are not described below.

In addition, that the performance indicator value of the first network object is not within the first performance indicator range may be understood as that the intent is not met, or a first intent expectation of the intent is not met. The first intent expectation is an intent expectation including a first performance indicator value and the first network object. In the following, the foregoing descriptions are used to express similar meanings. Details are not described below.

Optionally, the first tolerable unfulfilled duration may be an attribute in the intent, or may be a separate information element outside the intent. This is not particularly limited in this application.

Based on this technical solution, in an entire process in which the intent is applied to the network object, the network management service production network element may select, based on the first network object, the first performance indicator range, and the first tolerable unfulfilled duration that are indicated by the network management service consumption network element, a management action group that can enable the duration in which the performance indicator value of the first network object is not within the first performance indicator range to be less than or equal to the first tolerable unfulfilled duration during a period in which the intent is applied to the first network object. In other words, in a selection process, a requirement of the network management service consumption network element on tolerable unfulfilled duration can be considered, to enable a mechanism for selecting the management action group to be more proper, enable the network management service intent to be better executed, and enable the network management service production network element to provide a higher-quality network management service.

It should be noted that, that the network management service production network element determines the first target management action group may be understood as that, in an entire process in which the intent is applied to the first network object, the network management service production network element may determine, based on the first service indication information, a target management action group to be executed. For example, the network management service production network element may determine, based on the first service indication information, the target management action group to be executed when determining, for the first time, the target management action group to be executed. Alternatively, in a process in which the intent is applied to the first network object, for example, when a performance indicator of the first network object decreases due to a change in a network environment, and the intent expectation is no longer met, the network management service production network element may determine, based on the first service indication information, the target management action group to be executed.

With reference to the first aspect, in some implementations of the first aspect, that the network management service production network element receives first service indication information includes: The network management service production network element receives an intent management request message. The intent management request message includes the first service indication information.

With reference to the first aspect, in some implementations of the first aspect, the intent management request message is any one of the following messages: a request message to create an intent, a request message to modify an intent, and a request message to activate an intent.

With reference to the first aspect, in some implementations of the first aspect, that the network management service production network element determines a first target management action group includes: The network management service production network element obtains effectiveness consumption duration corresponding to each candidate management action group in a plurality of candidate management action groups of the network management service intent. The effectiveness consumption duration indicates duration consumed by the candidate management action group to take effect after the candidate management action group is applied to the first network object. The network management service production network element determines the first target management action group in the plurality of candidate management action groups based on the first tolerable unfulfilled duration and the effectiveness consumption duration corresponding to each candidate management action group in the plurality of candidate management action groups.

With reference to the first aspect, in some implementations of the first aspect, the effectiveness consumption duration corresponding to the first target management action group does not exceed remaining tolerable unfulfilled duration, and the remaining tolerable unfulfilled duration is obtained by subtracting, from the first tolerable unfulfilled duration, a duration in which the performance indicator value of the first network object is not within the first performance indicator range before the first target management action group is applied to the first network object.

Based on this technical solution, in a process of selecting the target management action group, the network management service production network element comprehensively considers a requirement of the network management service consumption network element and a feature of consumed duration of each management action group, to enable the mechanism for selecting the target management action group to be more proper, enable the network management service intent to be better executed, and enable the network management service production network element to provide the higher-quality network management service.

With reference to the first aspect, in some implementations of the first aspect, that the network management service production network element determines the first target management action group based on the first tolerable unfulfilled duration and the effectiveness consumption duration corresponding to each candidate management action group in the plurality of candidate management action groups includes: The network management service production network element obtains an effectiveness gain corresponding to each candidate management action group in the plurality of candidate management action groups. The effectiveness gain indicates a change that is of a performance indicator value and that is generated after the candidate management action group is applied to the first network object. The network management service production network element determines the first target management action group based on the first tolerable unfulfilled duration, the first performance indicator range, and the effectiveness consumption duration and the effectiveness gain that correspond to each candidate management action group in the plurality of candidate management action groups.

Based on this technical solution, in the process of selecting the target management action group, the network management service production network element comprehensively considers the requirement of the network management service consumption network element and a feature of an effectiveness gain of each management action group. In other words, when selecting the management action group, the network management service production network element may further perform selection based on a change that can be generated by each management action group, so that reliability of selecting the management action group by the network management service production network element can be improved.

It should be noted that the effectiveness consumption duration corresponding to each candidate management action group and the effectiveness gain corresponding to each candidate management action group may be understood as effectiveness information corresponding to each candidate management action group. In the following, the effectiveness information is sometimes used to represent the effectiveness consumption duration corresponding to each candidate management action group and/or the effectiveness gain corresponding to each candidate management action group. Details are not described below.

Based on this technical solution, in the process of selecting the target management action group, the network management service production network element comprehensively considers the requirement of the network management service consumption network element and the effectiveness consumption duration and the effectiveness gain of each management action group. In other words, in a process of determining the management action group, the network management service production network element may comprehensively consider a requirement of the network management service consumption network element for duration and an effect, and select a management action group that meets the intent expectation and that meets that duration in which the intent is not met is less than or equal to the tolerable unfulfilled duration, so that user experience can be improved, and the reliability of selecting the management action group by the network management service production network element can be improved.

With reference to the first aspect, in some implementations of the first aspect, the method further includes: The network management service production network element receives second service indication information from the network management service consumption network element. The second service indication information indicates a second performance indicator range of the network management service intent. The network management service production network element determines that the duration in which the performance indicator value of the first network object is not within the first performance indicator range is greater than the first tolerable unfulfilled duration. The network management service production network element determines a second target management action group based on the second service indication information, to execute the network management service intent. During a period in which the second target management action group is applied to the first network object, the second target management action group is used to enable the performance indicator value of the first network object to be within the second performance indicator range.

Based on this technical solution, the network management service consumption network element may further indicate a candidate second performance indicator range to the network management service production network element, and the network management service production network element may further consider the candidate second performance indicator range when selecting the management action group, to improve running efficiency.

With reference to the first aspect, in some implementations of the first aspect, the method further includes: The network management service production network element receives third service indication information from the network management service consumption network element. The third service indication information indicates a second network object of the network management service intent. The network management service production network element determines that the duration in which the performance indicator value of the first network object is not within the first performance indicator range is greater than the first tolerable unfulfilled duration. The network management service production network element determines a third target management action group based on the third service indication information, to execute the network management service intent. During a period in which the third target management action group is applied to the second network object, the third target management action group is used to enable a performance indicator value of the second network object to be within the first performance indicator range.

Based on this technical solution, the network management service consumption network element may further indicate a candidate second network object to the network management service production network element, and the network management service production network element may further consider the candidate second network object when selecting the management action group, to improve the running efficiency.

It may be understood that the second target object and the second performance indicator range may be collectively referred to as a second intent expectation. In other words, the network management service consumption network element may indicate a candidate second intent expectation, so that the network management service production network element may refer to the candidate second intent expectation when selecting the management action group.

With reference to the first aspect, in some implementations of the first aspect, the method further includes: The network management service production network element sends timeout indication information to the network management service consumption network element. The timeout indication information indicates that after the first target management action group is applied to the first network object, the duration in which the performance indicator value of the first network object is not within the first performance indicator range is greater than the first tolerable unfulfilled duration.

With reference to the first aspect, in some implementations of the first aspect, that the network management service production network element receives second service indication information from the network management service consumption network element includes: The network management service production network element receives the second service indication information from the network management service consumption network element in response to the timeout indication information; and/or that the network management service production network element receives third service indication information from the network management service consumption network element includes: The network management service production network element receives the third service indication information from the network management service consumption network element in response to the timeout indication information.

Based on this technical solution, if the duration in which the performance indicator value of the first network object is not within the first performance indicator range is greater than or equal to the first tolerable unfulfilled duration, the network management service production network element may send the timeout indication information to the network management service consumption network element, to obtain the candidate second intent expectation, that is, the second network object and/or the second performance indicator range, and select the target management action group based on the second intent expectation, to improve the running efficiency.

With reference to the first aspect, in some implementations of the first aspect, the method further includes: The network management service production network element sends first feedback information to the network management service consumption network element. After the first target management action group is applied to the first network object, the first feedback information indicates at least one of the following: the duration in which the performance indicator value of the first network object is not within the first performance indicator range, the performance indicator value of the first network object, and whether the performance indicator value of the first network object reaches the first performance indicator range.

With reference to the first aspect, in some implementations of the first aspect, the method further includes: The network management service production network element sends second feedback information to the network management service consumption network element. The second feedback information indicates at least one of the following: the effectiveness consumption duration corresponding to each candidate management action group in the plurality of candidate management action groups, and the effectiveness gain corresponding to each candidate management action group in the plurality of candidate management action groups.

With reference to the first aspect, in some implementations of the first aspect, the method further includes: The network management service production network element receives a first query message from the network management service consumption network element.

Based on this technical solution, the network management service consumption network element may query for a running status of the intent in a process in which the intent is executed, to improve user experience.

With reference to the first aspect, in some implementations of the first aspect, the method further includes: The network management service production network element receives change indication information from the network management service consumption network element. The change indication information indicates to change the first tolerable unfulfilled duration to second tolerable unfulfilled duration, and the second tolerable unfulfilled duration is determined based on the first feedback information.

Optionally, the second tolerable unfulfilled duration is determined based on the first feedback information and the second feedback information.

With reference to the first aspect, in some implementations of the first aspect, the method further includes: The network management service production network element determines a fourth target management action group based on the second tolerable unfulfilled duration, to execute the network management service intent. During a period in which the fourth target management action group is applied to the first network object, the fourth target management action group is used to enable the duration in which the performance indicator value of the first network object is not within the first performance indicator range to be less than or equal to the second tolerable unfulfilled duration.

Based on this technical solution, the network management service production network element may alternatively obtain changed tolerable unfulfilled duration in a process of the intent being applied to a network object. The network management service consumption network element determines the second tolerable unfulfilled duration based on information fed back by the network management service production network element, to improve intent running reliability.

With reference to the first aspect, in some implementations of the first aspect, before the network management service production network element receives the first service indication information from the network management service consumption network element, the method further includes: The network management service production network element receives a detection request message from the network management service consumption network element.

With reference to the first aspect, in some implementations of the first aspect, the method further includes: The network management service production network element sends a detection response message to the network management service consumption network element. The detection response message includes at least one of the following information: information indicating the effectiveness consumption duration corresponding to each candidate management action group in the plurality of candidate management action groups, information indicating the effectiveness gain corresponding to each candidate management action group in the plurality of candidate management action groups, information indicating estimated duration consumed for the performance indicator value of the first network object to reach the first performance indicator range, and information indicating whether the performance indicator value of the first network object can reach the first performance indicator range within detection duration in the detection request message.

Based on this technical solution, the network management service consumption network element may perform a detection procedure before requesting to create an intent, so that the first tolerable unfulfilled duration can be determined based on the detection response message fed back by the network management service production network element, to improve properness of setting the first tolerable unfulfilled duration and improve the intent running reliability.

With reference to the first aspect, in some implementations of the first aspect, the method further includes: The network management service production network element sends a knowledge query message to a network management service knowledge network element. The network management service production network element receives a query feedback message from the network management service knowledge network element. The query feedback message includes at least one of the following information: the information indicating the effectiveness consumption duration corresponding to each candidate management action group in the plurality of candidate management action groups, and the information indicating the effectiveness gain of each candidate management action group in the plurality of candidate management action groups.

Based on this technical solution, the network management service production network element may obtain the effectiveness information by querying a knowledge network element, and the network management service production network element may not need to locally store a large amount of intent knowledge, to save storage space of the network management service production network element.

With reference to the first aspect, in some implementations of the first aspect, the method further includes: The network management service production network element sends fulfillment information to the network management service consumption network element. The fulfillment information indicates at least one of the following: whether the performance indicator value of the first network object reaches the second performance indicator range, and whether the performance indicator value of the second network object reaches the first performance indicator range.

Based on this technical solution, the network management service consumption network element can learn of a fulfillment status of the intent and a running status of a network object based on the fulfillment information, to improve user experience.

According to a second aspect, a network management service intent execution method is provided. The method includes: A network management service consumption network element generates first service indication information. The first service indication information indicates a first network object, a first performance indicator range, and first tolerable unfulfilled duration for a network management service intent. The first tolerable unfulfilled duration is duration that is tolerable to the network management service consumption network element and in which a performance indicator value of the first network object is not within the first performance indicator range during a period in which the network management service intent is applied to the first network object. The network management service consumption network element sends the first service indication information to the network management service production network element.

Based on this technical solution, in an entire process in which an intent is applied to the first network object, the network management service consumption network element may indicate, to the network management service production network element, tolerable duration in which the performance indicator value of the first network object is not within the first performance indicator range, that is, the first tolerable unfulfilled duration. Then, the network management service production network element may select, based on the first tolerable unfulfilled duration indicated by the network management service consumption network element, an appropriate target management action group for configuration. In other words, in a process of selecting the target management action group, the network management service production network element can comprehensively consider a requirement of the network management service consumption network element, to enable a mechanism for selecting an intent operation to be more proper, enable a network management service intent of the network management service consumption network element to be better executed, and enable the network management service production network element to provide a higher-quality network management service.

With reference to the second aspect, in some implementations of the second aspect, the method further includes: The network management service consumption network element sends second service indication information to the network management service production network element. The second service indication information indicates a second performance indicator range of the network management service intent, and the second performance indicator range is a range that is of the performance indicator value of the first network object and that is tolerable to the network management service consumption network element when the performance indicator value of the first network object is not within the first performance indicator range.

With reference to the second aspect, in some implementations of the second aspect, the method further includes: The network management service consumption network element sends third service indication information to the network management service production network element. The third service indication information indicates a second network object of the network management service intent, and the second network object is a network object whose performance indicator value is within the first performance indicator range and that is determined by the network management service consumption network element when the performance indicator value of the first network object is not within the first performance indicator range.

With reference to the second aspect, in some implementations of the second aspect, the method further includes: The network management service consumption network element receives timeout indication information from the network management service production network element. The timeout indication information indicates that after a first target management action group is applied to the first network object, the duration in which the performance indicator value of the first network object is not within the first performance indicator range is greater than or equal to the first tolerable unfulfilled duration. That the network management service consumption network element sends second service indication information to the network management service production network element includes: The network management service consumption network element sends the second service indication information to the network management service production network element in response to the timeout indication information; and/or that the network management service consumption network element sends third service indication information to the network management service production network element includes: The network management service consumption network element sends the third service indication information to the network management service production network element in response to the timeout indication information.

With reference to the second aspect, in some implementations of the second aspect, the method further includes: The network management service consumption network element receives first feedback information from the network management service production network element. After the first target management action group is applied to the first network object, the first feedback information indicates at least one of the following: the duration in which the performance indicator value of the first network object is not within the first performance indicator range, the performance indicator value of the first network object, and whether the performance indicator value of the first network object reaches the first performance indicator range.

With reference to the second aspect, in some implementations of the second aspect, the method further includes: The network management service consumption network element receives second feedback information from the network management service production network element. The second feedback information indicates at least one of the following: effectiveness consumption duration corresponding to each candidate management action group in a plurality of candidate management action groups used to implement the network management service intent, and an effectiveness gain corresponding to each candidate management action group in the plurality of candidate management action groups. The effectiveness consumption duration is duration consumed by a corresponding candidate management action group to take effect after the corresponding candidate management action group is applied to the first network object, and the effectiveness gain is a change that is of the performance indicator value and that is generated after the corresponding candidate management action group is applied to the first network object.

With reference to the second aspect, in some implementations of the second aspect, the method further includes: The network management service consumption network element determines second tolerable unfulfilled duration based on the first feedback information. The network management service consumption network element sends change indication information to the production network element. The change indication information indicates that the first tolerable unfulfilled duration is changed to the second tolerable unfulfilled duration.

Optionally, the network management service consumption network element determines the second tolerable unfulfilled duration based on the first feedback information and the second feedback information.

With reference to the second aspect, in some implementations of the second aspect, the method further includes: The network management service consumption network element sends a detection request message to the network management service production network element. The network management service consumption network element receives a detection response message from the network management service production network element. The detection response message includes at least one of the following information: information indicating the effectiveness consumption duration corresponding to each candidate management action group in the plurality of candidate management action groups used to implement the network management service intent, information indicating the effectiveness gain corresponding to each candidate management action group in the plurality of candidate management action groups, information indicating estimated duration consumed for the performance indicator value of the first network object to reach the first performance indicator range, and information indicating whether the performance indicator value of the first network object can reach the first performance indicator range within detection duration in the detection request message. That a network management service consumption network element generates first service indication information includes: The network management service consumption network element generates the first service indication information based on the detection response message.

With reference to the second aspect, in some implementations of the second aspect, the method further includes: The consumption network element receives fulfillment information from the production network element. The fulfillment information indicates at least one of the following fulfillment results: whether the performance indicator value of the first network object reaches the second performance indicator range.

The implementations of the second aspect are the method of the network management service consumption network element corresponding to the implementations of the first aspect. For beneficial technical effects of the implementations of the second aspect, refer to descriptions of the related implementations of the first aspect. Details are not described herein.

According to a third aspect, a network management service intent execution method is provided. The method may be applied to a communication system, and the communication system includes a network management service production network element and a network management service consumption network element. The method includes: The network management service consumption network element generates first service indication information. The first service indication information indicates a first network object, a first performance indicator range, and first tolerable unfulfilled duration for a network management service intent. The network management service consumption network element sends the first service indication information to the network management service production network element, and the network management service production network element receives the first service indication information from the network management service consumption network element. The network management service production network element determines a first target management action group based on the first service indication information, to execute the network management service intent. During a period in which the first target management action group is applied to the first network object, the first target management action group is used to enable duration in which a performance indicator value of the first network object is not within the first performance indicator range to be less than or equal to the first tolerable unfulfilled duration.

Based on this technical solution, in an entire process in which an intent is applied to a network object, the network management service production network element may select, based on the first network object, the first performance indicator range, and the first tolerable unfulfilled duration that are indicated by the network management service consumption network element, a management action group that can enable the duration in which the performance indicator value of the first network object is not within the first performance indicator range to be less than or equal to the first tolerable unfulfilled duration during a period in which the intent is applied to the first network object. In other words, in a selection process, a requirement of the network management service consumption network element on tolerable unfulfilled duration can be considered, to enable a mechanism for selecting the management action group to be more proper, enable the network management service intent to be better executed, and enable the network management service production network element to provide a higher-quality network management service.

With reference to the third aspect, in some implementations of the third aspect, the method includes: The network management service consumption network element sends second service indication information to the network management service production network element. The second service indication information indicates a second performance indicator range of the network management service intent. The network management service production network element receives the second service indication information from the network management service consumption network element. The network management service production network element determines that the duration in which the performance indicator value of the first network object is not within the first performance indicator range is greater than the first tolerable unfulfilled duration. The network management service production network element determines a second target management action group based on the second service indication information, to execute the network management service intent. During a period in which the second target management action group is applied to the first network object, the second target management action group is used to enable the performance indicator value of the first network object to be within the second performance indicator range.

With reference to the third aspect, in some implementations of the third aspect, the method further includes: The network management service consumption network element sends third service indication information to the network management service production network element. The third service indication information indicates a second network object of the network management service intent. The network management service production network element receives the third service indication information from the network management service consumption network element. The network management service production network element determines that the duration in which the performance indicator value of the first network object is not within the first performance indicator range is greater than the first tolerable unfulfilled duration. The network management service production network element determines a third target management action group based on the third service indication information, to execute the network management service intent. During a period in which the third target management action group is applied to the second network object, the third target management action group is used to enable a performance indicator value of the second network object to be within the first performance indicator range.

With reference to the third aspect, in some implementations of the third aspect, the method further includes: The network management service production network element sends timeout indication information to the network management service consumption network element. The timeout indication information indicates that after the first target management action group is applied to the first network object, the duration in which the performance indicator value of the first network object is not within the first performance indicator range is greater than or equal to the first tolerable unfulfilled duration. The network management service consumption network element receives the timeout indication information from the network management service production network element. That the network management service consumption network element sends second service indication information to the network management service production network element includes: The network management service consumption network element sends the second service indication information to the network management service production network element in response to the timeout indication information; and/or that the network management service consumption network element sends third service indication information to the network management service production network element includes: The network management service consumption network element sends the third service indication information to the network management service production network element in response to the timeout indication information.

With reference to the third aspect, in some implementations of the third aspect, the method includes: The network management service production network element sends first feedback information to the network management service consumption network element. After the first target management action group is applied to the first network object, the first feedback information indicates at least one of the following: the duration in which the performance indicator value of the first network object is not within the first performance indicator range, and the performance indicator value of the first network object. The network management service consumption network element receives the first feedback information from the network management service production network element; and/or the network management service production network element sends second feedback information to the network management service consumption network element. The second feedback information indicates at least one of the following: effectiveness consumption duration corresponding to each candidate management action group in a plurality of candidate management action groups, and an effectiveness gain corresponding to each candidate management action group in the plurality of candidate management action groups. The network management service consumption network element receives the second feedback information from the network management service production network element. The network management service consumption network element determines second tolerable unfulfilled duration based on the first feedback information and/or the second feedback information. The network management service consumption network element sends change indication information to the network management service production network element. The change indication information indicates that the first tolerable unfulfilled duration is changed to the second tolerable unfulfilled duration. The network management service production network element receives the change indication information from the network management service consumption network element. The network management service production network element determines a fourth target management action group in the plurality of candidate management action groups based on the second tolerable unfulfilled duration and the effectiveness consumption duration corresponding to each candidate management action group in the plurality of candidate management action groups, to execute the network management service intent. During a period in which the fourth target management action group is applied to the first network object, the fourth target management action group is used to enable the duration in which the performance indicator value of the first network object is not within the first performance indicator range to be less than or equal to the second tolerable unfulfilled duration.

With reference to the third aspect, in some implementations of the third aspect, the method includes: The network management service consumption network element sends a detection request message to the network management service production network element, and the network management service consumption network element receives the detection request message from the network management service production network element. The network management service production network element sends a detection response message to the network management service consumption network element. The detection response message includes at least one of the following information: information indicating the effectiveness consumption duration corresponding to each candidate management action group in the plurality of candidate management action groups, information indicating the effectiveness gain corresponding to each candidate management action group in the plurality of candidate management action groups, information indicating estimated duration consumed for the performance indicator value of the first network object to reach the first performance indicator range, and information indicating whether the performance indicator value of the first network object can reach the first performance indicator range within detection duration in the detection request message. The network management service consumption network element receives the detection response message from the network management service production network element. That the network management service consumption network element generates first service indication information includes: The network management service consumption network element generates the first service indication information based on the detection response message.

With reference to the third aspect, in some implementations of the third aspect, the method further includes: The network management service production network element sends fulfillment information to the network management service consumption network element. The fulfillment information indicates at least one of the following fulfillment results: whether the performance indicator value of the first network object reaches the second performance indicator range, and whether the performance indicator value of the second network object reaches the first performance indicator range. The network management service production network element receives the fulfillment information from the network management service consumption network element.

The implementations of the third aspect are the method in a communication system corresponding to the implementations of the first aspect. For beneficial technical effects of the implementations of the third aspect, refer to descriptions of related implementations of the first aspect. Details are not described herein.

According to a fourth aspect, a communication apparatus is provided. The apparatus includes a transceiver module and a processing module. The transceiver module is configured to receive first service indication information from a network management service consumption network element. The first service indication information indicates a first network object, a first performance indicator range, and first tolerable unfulfilled duration for a network management service intent. The processing module is configured to determine a first target management action group based on the first service indication information, to execute the network management service intent. During a period in which the first target management action group is applied to the first network object, the first target management action group is used to enable duration in which a performance indicator value of the first network object is not within the first performance indicator range to be less than or equal to the first tolerable unfulfilled duration.

Based on this technical solution, in an entire process in which an intent is applied to a network object, a network management service production network element may select, based on the first network object, the first performance indicator range, and the first tolerable unfulfilled duration that are indicated by the network management service consumption network element, a management action group that can enable the duration in which the performance indicator value of the first network object is not within the first performance indicator range to be less than or equal to the first tolerable unfulfilled duration during a period in which the network management service intent is applied to the first network object. In other words, in a selection process, a requirement of the network management service consumption network element on tolerable unfulfilled duration can be considered, to enable a mechanism for selecting the management action group to be more proper, enable the network management service intent to be better executed, and enable the network management service production network element to provide a higher-quality network management service.

With reference to the fourth aspect, in some implementations of the fourth aspect, the transceiver module is configured to receive an intent management request message. The intent management request message includes the first service indication information.

With reference to the fourth aspect, in some implementations of the fourth aspect, the intent management request message is any one of the following messages: a request message to create an intent, a request message to modify an intent, and a request message to activate an intent.

With reference to the fourth aspect, in some implementations of the fourth aspect, the processing module is configured to obtain effectiveness consumption duration corresponding to each candidate management action group in a plurality of candidate management action groups of the network management service intent. The effectiveness consumption duration indicates duration consumed by the candidate management action group to take effect after the candidate management action group is applied to the first network object. The processing module is configured to determine the first target management action group in the plurality of candidate management action groups based on the first tolerable unfulfilled duration and the effectiveness consumption duration corresponding to each candidate management action group in the plurality of candidate management action groups.

With reference to the fourth aspect, in some implementations of the fourth aspect, effectiveness consumption duration corresponding to the first target management action group does not exceed remaining tolerable unfulfilled duration, and the remaining tolerable unfulfilled duration is obtained by subtracting, from the first tolerable unfulfilled duration, a duration in which the performance indicator value of the first network object is not within the first performance indicator range before the first target management action group is applied to the first network object.

With reference to the fourth aspect, in some implementations of the fourth aspect, the processing module is configured to obtain an effectiveness gain corresponding to each candidate management action group in the plurality of candidate management action groups. The effectiveness gain indicates a change that is of a performance indicator value and that is generated after the candidate management action group is applied to the first network object. The processing module is configured to determine the first target management action group based on the first tolerable unfulfilled duration, the first performance indicator range, and the effectiveness consumption duration and the effectiveness gain that correspond to each candidate management action group in the plurality of candidate management action groups.

With reference to the fourth aspect, in some implementations of the fourth aspect, the transceiver module is configured to receive second service indication information from the network management service consumption network element. The second service indication information indicates a second performance indicator range of the network management service intent. The processing module is configured to determine that the duration in which the performance indicator value of the first network object is not within the first performance indicator range is greater than the first tolerable unfulfilled duration. The processing module is configured to determine a second target management action group based on the second service indication information, to execute the network management service intent. During a period in which the second target management action group is applied to the first network object, the second target management action group is used to enable the performance indicator value of the first network object to be within the second performance indicator range.

With reference to the fourth aspect, in some implementations of the fourth aspect, the transceiver module is configured to receive third service indication information from the network management service consumption network element. The third service indication information indicates a second network object of the network management service intent. The processing module is configured to determine that the duration in which the performance indicator value of the first network object is not within the first performance indicator range is greater than the first tolerable unfulfilled duration. The processing module is configured to determine a third target management action group based on the third service indication information, to execute the network management service intent. During a period in which the third target management action group is applied to the second network object, the third target management action group is used to enable a performance indicator value of the second network object to be within the first performance indicator range.

With reference to the fourth aspect, in some implementations of the fourth aspect, the transceiver module is configured to send timeout indication information. The timeout indication information indicates that after the first target management action group is applied to the first network object, the duration in which the performance indicator value of the first network object is not within the first performance indicator range is greater than the first tolerable unfulfilled duration.

With reference to the fourth aspect, in some implementations of the fourth aspect, the transceiver module is configured to send first feedback information. After the first target management action group is applied to the first network object, the first feedback information indicates at least one of the following: the duration in which the performance indicator value of the first network object is not within the first performance indicator range, and the performance indicator value of the first network object.

With reference to the fourth aspect, in some implementations of the fourth aspect, the transceiver module is configured to send second feedback information. The second feedback information indicates at least one of the following: the effectiveness consumption duration corresponding to each candidate management action group in the plurality of candidate management action groups, and the effectiveness gain corresponding to each candidate management action group in the plurality of candidate management action groups.

With reference to the fourth aspect, in some implementations of the fourth aspect, the transceiver module is configured to receive change indication information from the network management service consumption network element. The change indication information indicates to change the first tolerable unfulfilled duration to second tolerable unfulfilled duration, and the second tolerable unfulfilled duration is determined based on the first feedback information and/or the second feedback information.

With reference to the fourth aspect, in some implementations of the fourth aspect, the processing module is configured to determine a fourth target management action group based on the second tolerable unfulfilled duration, to execute the network management service intent. During a period in which the fourth target management action group is applied to the first network object, the fourth target management action group is used to enable the duration in which the performance indicator value of the first network object is not within the first performance indicator range to be less than or equal to the second tolerable unfulfilled duration.

With reference to the fourth aspect, in some implementations of the fourth aspect, before the transceiver module is configured to receive the first service indication information from the network management service consumption network element, the transceiver module is configured to receive a detection request message from the network management service consumption network element.

With reference to the fourth aspect, in some implementations of the fourth aspect, the transceiver module is configured to send a detection response message. The detection response message includes at least one of the following information: information indicating the effectiveness consumption duration corresponding to each candidate management action group in the plurality of candidate management action groups, information indicating the effectiveness gain corresponding to each candidate management action group in the plurality of candidate management action groups, information indicating estimated duration consumed for the performance indicator value of the first network object to reach the first performance indicator range, and information indicating whether the performance indicator value of the first network object can reach the first performance indicator range within detection duration in the detection request message.

With reference to the fourth aspect, in some implementations of the fourth aspect, the transceiver module is configured to send a knowledge query message to a network management service knowledge network element. The transceiver module is configured to receive a query feedback message from the network management service knowledge network element. The query feedback message includes at least one of the following information: the information indicating the effectiveness consumption duration corresponding to each candidate management action group in the plurality of candidate management action groups, and the information indicating the effectiveness gain of each candidate management action group in the plurality of candidate management action groups.

With reference to the fourth aspect, in some implementations of the fourth aspect, the transceiver module is configured to send fulfillment information. The fulfillment information indicates at least one of the following fulfillment results: whether the performance indicator value of the first network object reaches the second performance indicator range, and whether the performance indicator value of the second network object reaches the first performance indicator range.

The implementations of the fourth aspect are an apparatus of the network management service production network element corresponding to the implementations of the first aspect. For beneficial technical effects of the implementations of the fourth aspect, refer to descriptions of the related implementations of the first aspect. Details are not described herein.

According to a fifth aspect, a communication apparatus is provided. The apparatus includes a transceiver module and a processing module. The processing module is configured to generate first service indication information. The first service indication information indicates a first network object, a first performance indicator range, and first tolerable unfulfilled duration for a network management service intent. The first tolerable unfulfilled duration is duration that is tolerable to the network management service consumption network element and in which a performance indicator value of the first network object is not within the first performance indicator range during a period in which the network management service intent is applied to the first network object. The transceiver module is configured to send the first service indication information to the network management service production network element.

Based on this technical solution, in an entire process in which an intent is applied to the first network object, the network management service consumption network element may indicate, to the network management service production network element, tolerable duration in which the performance indicator value of the first network object is not within the first performance indicator range, that is, the first tolerable unfulfilled duration. Then, the network management service production network element may select, based on the first tolerable unfulfilled duration indicated by the network management service consumption network element, an appropriate target management action group for configuration. In other words, in a process of selecting the target management action group, the network management service production network element can comprehensively consider a requirement of the network management service consumption network element, to enable a mechanism for selecting an intent operation to be more proper, enable the network management service intent of the network management service consumption network element to be better executed, and enable the network management service production network element to provide a higher-quality network management service.

With reference to the fifth aspect, in some implementations of the fifth aspect, the transceiver module is configured to send second service indication information to the network management service production network element. The second service indication information indicates a second performance indicator range of the network management service intent, and the second performance indicator range is a range that is of the performance indicator value of the first network object and that is tolerable to the network management service consumption network element.

With reference to the fifth aspect, in some implementations of the fifth aspect, the transceiver module is further configured to send third service indication information to the network management service production network element. The third service indication information indicates a second network object of the network management service intent, and the second network object is a network object whose performance indicator value is within the first performance indicator range and that is determined by the network management service consumption network element.

With reference to the fifth aspect, in some implementations of the fifth aspect, the transceiver module is further configured to receive timeout indication information from the network management service production network element. The timeout indication information indicates that after the first target management action group is applied to the first network object, the duration in which the performance indicator value of the first network object is not within the first performance indicator range is greater than or equal to the first tolerable unfulfilled duration. The transceiver module is further configured to send the second service indication information to the network management service production network element in response to the timeout indication information; and/or the transceiver module is further configured to send the third service indication information to the network management service production network element in response to the timeout indication information.

With reference to the fifth aspect, in some implementations of the fifth aspect, the transceiver module is configured to receive first feedback information from the network management service production network element. After the first target management action group is applied to the first network object, the first feedback information indicates at least one of the following: the duration in which the performance indicator value of the first network object is not within the first performance indicator range, the performance indicator value of the first network object, and whether the performance indicator value of the first network object reaches the first performance indicator range.

With reference to the fifth aspect, in some implementations of the fifth aspect, the transceiver module is configured to receive second feedback information from the network management service production network element. The second feedback information indicates at least one of the following: effectiveness consumption duration corresponding to each candidate management action group in a plurality of candidate management action groups used to implement the network management service intent, and an effectiveness gain corresponding to each candidate management action group in the plurality of candidate management action groups. The effectiveness consumption duration is duration consumed by a corresponding candidate management action group to take effect after the corresponding candidate management action group is applied to the first network object, and the effectiveness gain is a change that is of the performance indicator value and that is generated after the corresponding candidate management action group is applied to the first network object.

With reference to the fifth aspect, in some implementations of the fifth aspect, the processing module is further configured to determine second tolerable unfulfilled duration based on the first feedback information. The transceiver module is further configured to send change indication information to the network management service production network element. The change indication information indicates that the first tolerable unfulfilled duration is changed to the second tolerable unfulfilled duration.

With reference to the fifth aspect, in some implementations of the fifth aspect, the transceiver module is further configured to send detection request information to the network management service production network element. The transceiver module is further configured to receive a detection response message from the network management service production network element in response to the detection request information. The detection response message includes at least one of the following information: information indicating the effectiveness consumption duration corresponding to each candidate management action group in the plurality of candidate management action groups used to implement the network management service intent, information indicating the effectiveness gain corresponding to each candidate management action group in the plurality of candidate management action groups, information indicating estimated duration consumed for the performance indicator value of the first network object to reach the first performance indicator range, and information indicating whether the performance indicator value of the first network object can reach the first performance indicator range within detection duration in the detection request message. The processing module is further configured to generate the first service indication information based on the detection response message.

With reference to the fifth aspect, in some implementations of the fifth aspect, the transceiver module is further configured to receive fulfillment information from the production network element. The fulfillment information indicates at least one of the following: whether the performance indicator value of the first network object reaches the second performance indicator range, and whether a performance indicator value of the second network object reaches the first performance indicator range.

The implementations of the fifth aspect are the apparatus of the network management service consumption network element corresponding to the implementations of the first aspect. For beneficial technical effects of the implementations of the fifth aspect, refer to descriptions of the related implementations of the first aspect. Details are not described herein.

According to a sixth aspect, a communication apparatus is provided. The communication apparatus has a function of implementing any one of the first aspect or the possible implementations of the first aspect, any one of the second aspect or the possible implementations of the second aspect, or any one of the third aspect or the possible implementations of the third aspect. The function may be implemented by hardware, or may be implemented by hardware executing corresponding software. The hardware or the software includes one or more units corresponding to the foregoing function.

According to a seventh aspect, a communication apparatus is provided, including a processor and a memory. Optionally, the apparatus may further include a transceiver. The memory is configured to store a computer program, and the processor is configured to: invoke and run the computer program stored in the memory, and control the transceiver to receive and send a signal, to enable the communication apparatus to perform the method according to any one of the first aspect or the possible implementations of the first aspect.

For example, the communication apparatus is a network management service production network element.

According to an eighth aspect, a communication apparatus is provided, including a processor and a memory. Optionally, the apparatus may further include a transceiver. The memory is configured to store a computer program, and the processor is configured to: invoke and run the computer program stored in the memory, and control the transceiver to receive and send a signal, to enable the communication apparatus to perform the method in any one of the second aspect or the possible implementations of the second aspect.

For example, the communication apparatus is a network management service consumption network element.

According to a ninth aspect, a communication apparatus is provided, including a processor and a communication interface. The communication interface is configured to: receive data and/or information, and transmit the received data and/or information to the processor. The processor processes the data and/or information. In addition, the communication interface is further configured to output data and/or information that are/is obtained through processing by the processor, so that the method according to any one of the first aspect or the possible implementations of the first aspect is performed. The communication apparatus may be a chip used in a network management service production network element.

According to a tenth aspect, a communication apparatus is provided, including a processor and a communication interface. The communication interface is configured to: receive data and/or information, and transmit the received data and/or information to the processor. The processor processes the data and/or information. In addition, the communication interface is further configured to output data and/or information that are/is obtained through processing by the processor, so that the method according to any one of the second aspect or the possible implementations of the second aspect is performed. The communication apparatus may be a chip used in a network management service consumption network element.

According to an eleventh aspect, a computer-readable storage medium is provided. The computer-readable storage medium stores computer instructions, and when the computer instructions are run on a computer, the method according to any one of the first aspect or the possible implementations of the first aspect is performed.

According to a twelfth aspect, a computer-readable storage medium is provided. The computer-readable storage medium stores computer instructions, and when the computer instructions are run on a computer, the method according to any one of the second aspect or the possible implementations of the second aspect is performed.

According to a thirteenth aspect, a computer program product is provided. The computer program product includes computer program code, and when the computer program code is run on a computer, the method according to any one of the first aspect or the possible implementations of the first aspect is performed.

According to a fourteenth aspect, a computer program product is provided. The computer program product includes computer program code, and when the computer program code is run on a computer, the method according to any one of the second aspect or the possible implementations of the second aspect is performed.

According to a fifteenth aspect, a wireless communication system is provided, including the communication apparatus according to the fourth aspect and/or the communication apparatus according to the fifth aspect.

According to a sixteenth aspect, a wireless communication system is provided, including the communication apparatus according to any one or more of the fourth aspect to the fifteenth aspect, or the communication apparatus according to any possible implementation of any one of the aspects.

### BRIEF DESCRIPTION OF DRAWINGS

FIG. 1 is a diagram of an architecture of a communication system to which an embodiment of this application is applicable;
FIG. 2 is an illustrative diagram of selecting a management action group by a production network element in a process in which an intent is executed;
FIG. 3 is a schematic flowchart of a network management service intent execution method according to an embodiment of this application;
FIG. 4 is an illustrative diagram of a manner of determining a first target management action group by a production network element according to an embodiment of this application;
FIG. 5 is a schematic flowchart of a method for determining tolerable unfulfilled duration by a consumption network element based on a detection procedure according to an embodiment of this application;
FIG. 6 is a schematic flowchart of a method for obtaining effectiveness information by a production network element according to an embodiment of this application;
FIG. 7 is a schematic flowchart of a method for obtaining second service indication information and/or third service indication information by a production network element according to an embodiment of this application;
FIG. 8 is a schematic flowchart of a method for changing tolerable unfulfilled duration according to an embodiment of this application;
FIG. 9 is a schematic flowchart of a method for configuring effectiveness information according to an embodiment of this application;
FIG. 10 is a schematic flowchart of an example of an implementation method for executing a network management service intent according to an embodiment of this application; and
FIG. 11 and FIG. 12 each are a diagram of a possible communication apparatus according to an embodiment of this application.

### DESCRIPTION OF EMBODIMENTS

The following describes technical solutions of this application with reference to accompanying drawings.

The technical solutions of this application may be applied to various network function virtualization (network function virtualization, NFV) systems. In the system, a current service technical solution, network construction solution, and network operation and maintenance method of an operator may be described as modes and policies by using a standard formal language, and the technical solution and the construction solution are implemented based on the modes and the policies. For example, the technical solutions in this application may be applied to one or more of the following systems: a wireless intent driven network (wireless intent driven network, wIDN) system, an experiential networked intelligence (experiential networked intelligence, ENI) system, an intent driven management service (intent driven management service, IDMS) system, an open network automation platform (open network automation platform, ONAP) system, or the like.

For clarity, the following explains some terms in embodiments of this application.

### 1. Network management, network management service, network management service production entity, and network management service consumption entity

### 1.1 Network management

The network management refers to managing a network resource, including but not limited to monitoring, controlling, and recording performance and usage of the network resource, and delivering a management action group to the network resource (such as a device in a network) based on a detected network status, to enable the network to run effectively. For example, the network management may be monitoring, testing, configuring, analyzing, evaluating, and controlling the network resource. The network management may alternatively be that when a fault occurs in the network, the fault can be reported and processed in time, a network system can be coordinated and maintained to run efficiently, and the like. The network resource is an object to which the network management is applied, and may also be referred to as a network object or a managed object. For example, the network resource may be a network device, a base station device, a router, a switch, or a core network device.

### 1.2 Network management service

The network management service refers to a service that provides a network management function. A production entity of the service usually provides the network management function for a consumption entity of the service through a network interface (for example, a service based interface).

### 1.3 Network management service production entity

An entity that provides the network management service is referred to as the network management service production entity. For example, a capability or a function of the network management service production entity may be deployed on a network element, and the network element is referred to as a network management service production network element. Alternatively, a capability or a function of the network management service production entity may be deployed on another device. This is not limited in embodiments of this application. For ease of description, the network management service production network element is used as an example for description in embodiments of this application, but may be replaced with another device on which the capability or the function of the network management service production entity is deployed.

### 1.4 Network management service consumption entity

An entity that invokes the network management service is referred to as the network management service consumption entity. For example, a capability or a function of the network management service consumption entity may be deployed on a network element, and the network element is referred to as a network management service consumption network element. Alternatively, a capability or a function of the network management service consumption entity may be deployed on another device. This is not limited in embodiments of this application. For ease of description, the network management service consumption network element is used as an example for description in embodiments of this application, but may be replaced with another device on which the capability or the function of the network management service consumption entity is deployed.

### 2. Network management service intent (also referred to as intent for short)

The network management service intent refers to a requirement of the network management service consumption entity for the network management service, and may also be referred to as a network management service requirement. This name is not limited in embodiments of this application. For example, the network management service intent may be an optical private line service intent.

In an intent-based interaction scenario of this application, two roles are mainly included: a network management service provision entity and the network management service consumption entity. The network management service provision entity may also be referred to as a network management service provider, an intent provider (intent provider), an intent handler (intent handler), or the like. The network management service consumption entity may also be referred to as a network management service consumer, an intent consumer (intent consumer), an intent owner (intent owner), or the like.

The network management service consumption entity may be an invoker of the network management service, and may perform operations such as creating, modifying, deleting, and querying for a network management service intent expression. The network management service consumption entity may be configured in a network management system (network management system, NMS), an element management system (element management system, EMS), or a network device (network equipment, NE), and may be a management function, a management function entity, a management entity, a network device, a network element, or the like. This is not limited in this application.

The intent may be applied to the network system, to achieve an expected objective of a specified performance indicator of the network device in a specific range. The intent may express an expectation for the network system by using a formal specification and description information. The formal specification may refer to intent-specific syntax or semantics. The description information may be used to describe a requirement and an objective of the intent, and restrict a network object and a performance indicator range included in the intent. Optionally, the intent further includes an intent context.

A network management service intent template refers to sample description information of the network management service intent, and may also be referred to as a network management service requirement template. This name is not limited in embodiments of this application. Specifically, the network management service intent template may include a network object information template and a performance indicator information template. Optionally, the network management service intent template may further include a context (context) information template.

The network object information template indicates a sample target network object. A target network object is a physical entity or a logical entity used to implement the network management service. The target network object is a network object that can be managed by the network management service provision entity.

For example, the network object may also be referred to as an expected object. The expected object may refer to a network service, a network element, a network area, a network service, or the like, and the network area may be a logical network area or a physical network area. It may be understood that, in this case, the network object may not be a specific network object, but only indicates one or more network object types. In addition, in a possible design, in the network management service intent template, a type or types of network objects may not be specifically indicated. This means that the network management service consumption entity determines the physical entity or the logical entity used to implement the network management service. For example, the network object may be a base station in an urban area, may be a network slice 001, or may be a subnet 002.

The performance indicator information template indicates a sample expected objective, and the expected objective indicates performance of the target network object indicated by the network object information template, a target indicator requirement that can be proposed by the network management service consumption entity, or a target indicator requirement that can be met by the network management service provision entity, and may be represented by a service-level agreement (service-level agreement, SLA) of the network management service.

For example, performance indicator information may also be referred to as an expected objective. An expected objective template may include one or more target indicator requirements. For example, the expected objective template may include at least one of a delay parameter, a service availability ratio parameter, and a bandwidth parameter. For example, the service availability ratio parameter may be understood as a ratio of a difference between service duration of a service in a preset time period and interruption duration of the service in the preset time period to the service duration of the service in the preset time period. It may be understood that the target indicator requirement included in the expected information template is merely an example, and the expected information template may further include another target indicator requirement.

The context information template indicates a constraint condition of a sample network management service. The constraint condition may indicate an environment in which the target network object indicated by the network object information template is located, or may be used to configure effectiveness time, a periodicity, or the like of the network management service intent expression. In the network management service intent template, the context information template includes a specific constraint parameter, or may not include a specific constraint parameter. The latter means that the network management service consumption entity determines the specific constraint parameter included in the context information template.

### 3. Intent expression

In embodiments of this application, the intent expression is an instantiation result of the network management service intent template. A consumer of the network management service intent can instantiate the intent based on the intent template to generate the intent expression. The intent expression generated after the instantiation can be used for a specific network service. For example, the intent expression may be represented by a list of a group of attributes and key-value pairs (for example, a group of [attribute, value]) of the intent.

For example, the intent expression includes a performance indicator information instance, a network object information instance, and a context information instance.

For example, the performance indicator information instance may include a value or a value range of the target indicator requirement corresponding to the performance indicator information. For example, the target indicator requirement corresponding to the performance indicator information template includes the bandwidth parameter, and the performance indicator information instance includes that a value of the bandwidth parameter is 20 M, or a value range of the bandwidth parameter is 10 M to 15 M. For example, the target indicator requirement corresponding to the performance indicator information template includes the delay parameter, and a delay parameter instance includes that a value of the delay parameter is 2s, or a value range of the delay parameter is 1s to 5s.

A target network object indicated by the network object information instance is an instantiation result of the target network object indicated by the network object information template. For example, the target network object indicated by the network object information instance is one of target network objects indicated by the network object information template, in other words, indicates one of the physical entity or the logical entity that implements the network management service. In this case, the network object information instance indicates a specific network object. For example, the network object information template indicates a network service, and the network object information instance indicates an optical private line service A, that is, a specific optical private line service.

The context information instance indicates a constraint condition of the network management service intent expression. For example, the context information instance includes a constraint parameter of the network management service intent expression. For example, the context information instance may include information about a source end and a sink end corresponding to the target network object indicated by the network object instance. For another example, the context information instance may include the effectiveness time or the periodicity of the network management service intent expression.

An intent expectation information instance includes the performance indicator information instance and the network object information instance.

### 4. Intent instance

A network management service intent instance refers to a network management service intent processing process locally created by the network management service provision entity based on the received network management service intent expression (for example, the performance indicator information instance, the network object information instance, or the context information instance).

The network management service intent processing process is used to process the network management service intent expression. For example, the network management service intent processing process may include an identifier, and the identifier is used to identify the process. The network management service intent processing process may include a computing resource, and the computing resource is used to perform operations such as network management service intent translation and database (for example, a semantic knowledge base) query. The network management service intent processing process may include a storage resource, and the storage resource is used to store the network management service intent expression, a network management service intent translation result, and the like.

The network management service intent translation is used to convert the network management service intent expression into a corresponding management action group. The management action group may be instructions that are applied to the physical entity or the logical entity, for example, adjusting an antenna tilt angle of a base station or turning on an energy saving switch of a cell.

### 5. Management action group (actions)

The management action group is one or more management actions generated by an intent producer based on an intent expression. The intent producer can execute these management actions to meet an intent of the intent consumer. The management action group may also be referred to as a management operation or an intent operation. The management action group may be an operation instruction set for the expected object (for example, a physical entity or a logical entity to which the intent is applied and that is in the network system), and includes one or more instructions, for example, adjusting an antenna tilt angle of a base station or turning on an energy saving switch of a cell.

It should be noted that the producer may generate a plurality of management action groups based on the intent expression. In an execution process, the producer may select some management action groups from the plurality of management action groups at one time for execution. In other words, the management action group generated by the producer based on intent expression translation is an optional operation that can be used to meet the intent. The producer may select one of the management action groups for execution to meet the intent, or may select the management action group at a plurality of times for execution to meet the intent.

### 6. Intent knowledge

The intent knowledge is intent-related parameter information, such as intent template information, management action group information, and network object information, that can be used by the producer in an intent execution process. The intent knowledge may be stored in a producer apparatus. For example, a knowledge base used to store the intent knowledge is disposed in the producer apparatus, or the intent knowledge may be stored in a knowledge network element that can provide a knowledge query service. This is not particularly limited in this application.

### 7. Intent maintenance

An intent expectation may describe a performance requirement on the network object in a period of time, and the intent maintenance may be understood as that the producer manages the network object in this period of time to meet the intent. Usually, the producer may periodically detect whether the network system meets the intent. If the network system does not meet the intent, for example, when an executed management action group does not enable the intent to be met, or when a performance indicator of the network system decreases due to a change of a network environment, and the intent is no longer met, the producer may select a management action group from optional management action groups for execution, to enable the intent to be continuously met.

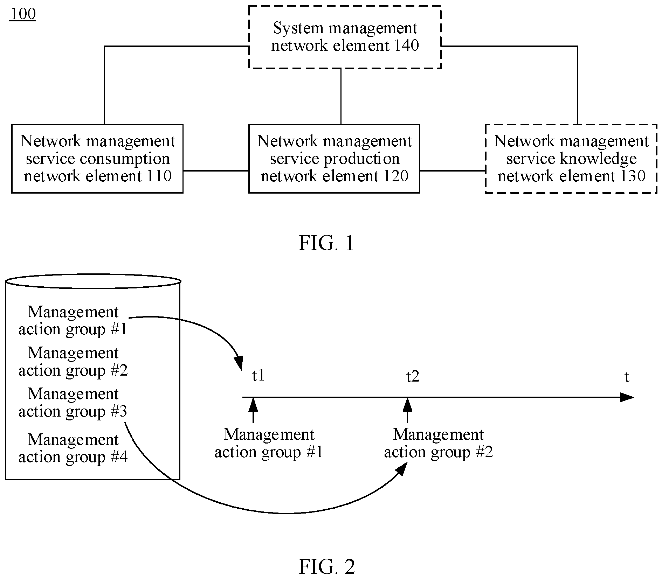

The foregoing describes related terms in embodiments of this application. The following describes, with reference to FIG. 1, an application scenario to which embodiments of this application are applicable.

FIG. 1 is a diagram of a structure of a communication system to which an embodiment of this application is applicable. Apparatuses that may be in the communication system are first described.
1. A network management service consumption network element 110 may be configured to: invoke a management service, or invoke an intent service to manage a network system. For example, the network management service consumption network element 110 may instantiate an intent template, set an intent expectation for the network system and an intent context to generate an intent expression, and send the intent expression to a network management service production network element 120 to implement the expectation for the network system.

The network management service consumption network element 110 may also be referred to as a network management service consumer, an intent management service consumer (intent management service consumer), an intent consumer (intent consumer), an intent owner (intent owner), or the like. In a future communication system, the network management service consumption network element may also have another name. This is not particularly limited in this application.

2. The network management service production network element 120 may be configured to provide the management service. For example, the network management service production network element 120 may receive the intent expression from the network management service consumption network element 110, and perform, based on the intent expression, procedures of intent translation, intent management, and intent execution and maintenance.

The network management service production network element 120 may also be referred to as an intent management service provider (intent management service provider), a network management service producer, an intent provider (intent provider), an intent handler (intent handler), or the like. In the future communication system, the network management service production network element may also have another name. This is not particularly limited in this application.

3. A network management service knowledge network element 130 may be configured to store knowledge, for example, the network management service knowledge network element 130 may store intent knowledge, where the intent knowledge is expert experience needed for managing a network, for example, instructions for improving a throughput or instructions for rectifying a fault, and the network management service knowledge network element 130 can provide services such as knowledge storage, knowledge query, and knowledge update.

The network management service knowledge network element 130 may also be referred to as a knowledge base, a knowledge management (knowledge management, KM) network element, or the like. In the future communication system, the network management service production network element may also have another name. This is not particularly limited in this application.

4. A system management network element 140 may be configured to provide a configuration information service. For example, the system management network element 140 may be configured to configure an intent template for the network management service production network element 120. The intent template is used by the network management service production network element 120 to check a format and syntax of the intent expression. The system management network element 140 may alternatively be configured to configure intent knowledge for the network management service knowledge network element 130. The intent knowledge is used by the network management service knowledge network element 130 to provide functions such as knowledge storage and query.

It should be noted that the network elements may be network elements in a hardware device, may be software functions running on dedicated hardware, or may be virtualized functions instantiated on a platform (for example, a cloud platform). It may be understood that the network elements may be implemented by one device, or may be implemented by a plurality of devices together. In addition, the network elements may further be functional modules in a system, for example, functional modules in a network management system (network management system, NMS), an equipment management system (equipment management system, EMS), or a device, for example, one or more functional modules in a network device (network equipment, NE). The network device may be a base station or a core network element.

For example, the network management service consumption network element 110 may be deployed in the NMS, and the network management service production network element 120 and the network management service knowledge network element 130 may be deployed in the EMS. The network management service consumption network element 110 may exchange information with the network management service production network element 120 through an interface between the NMS and the EMS, and the network management service production network element 120 and the network management service knowledge network element 130 may exchange information through an internal interface of the EMS.

For another example, the network management service consumption network element 110 may be deployed in the NMS, the network management service production network element 120 may be deployed in the EMS, and the network management service knowledge network element 130 may be implemented by an independent device. The network management service consumption network element 110 may exchange the information with the network management service production network element 120 through the interface between the NMS and the EMS, and the network management service production network element 120 exchanges the information with the network management service knowledge network element 130 through an interface between the EMS and a device that implements the network management service knowledge network element 130.

It should be further noted that the solution of this application may be further applied to another system including a corresponding network element. This is not limited in this application, and is not specifically limited in this embodiment of this application.

In the foregoing process of describing intent maintenance, a network management service producer may select a management action group from a plurality of management action groups for execution, so that a network system can continuously meet an intent expectation within a period of time. For ease of understanding, the following provides descriptions with reference to FIG. 2.

FIG. 2 is an illustrative diagram of selecting a management action group by a network management service production network element in a process in which an intent is executed. Refer to FIG. 2. The network management service production network element receives an intent expression from a network management service consumption network element, and obtains, based on the intent expression, a management action group #1 to a management action group #4 that are optional. At a moment t1, the network management service production network element randomly selects the management action group #1 from the four management action groups for execution, to meet an intent expectation. However, at a moment t2, the network management service production network element detects that a performance indicator value of a network object to which the intent is applied does not meet an intent objective in the intent expectation. In this case, the network management service production network element may select the management action group from the optional management action groups for execution again. For example, as shown in FIG. 2, the network management service production network element randomly selects the management action group #2 at the moment t2 for execution.

However, in a process of selecting the management action group, a producer does not consider that different management action groups may have different operation gains and effectiveness consumption duration. A mechanism of randomly selecting the management action group by the producer may cause the intent to be in an unmet state for a long period of time in an execution process. For example, the network object may not reach the intent objective in a period of time after the moment t2. For example, a bandwidth optimization intent expects that a proportion of terminal devices whose uplink and downlink throughputs are less than 5 Mbps is less than 10%. If the proportion that is of the network objective and that is of terminal devices whose uplink and downlink throughputs are less than 5 Mbps is always greater than or equal to 10% in a period of time, performance of the network object is affected, user experience is affected, and a user complaint rate may increase. This result may be considered that the intent is not well executed.

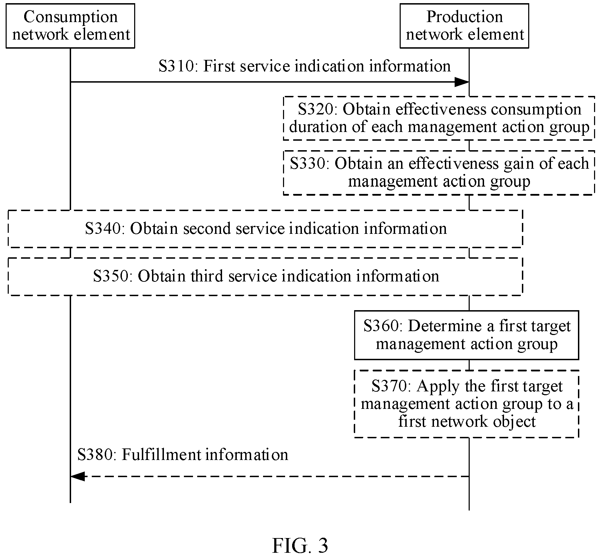

This application provides a network management service intent execution method, an apparatus, and a system, to enable a network management service intent to be better executed, and enable the network management service production network element to provide a higher-quality network management service. The following describes the intent execution method with reference to FIG. 3 to FIG. 10. The method in FIG. 3 to FIG. 10 may be applied to the foregoing network management service consumption network element 110 and network management service production network element 120.

First, it should be noted that, for brevity, in the following, the network management service production network element is sometimes referred to as a production network element for short, the network management service consumption network element is referred to as a consumption network element for short, and a network management service knowledge network element is referred to as a knowledge network element for short. Details are not described below.

FIG. 3 is a schematic flowchart of a network management service intent execution method according to an embodiment of this application.

S310: A consumption network element sends first service indication information to a production network element, and accordingly, the production network element receives the first service indication information from the consumption network element.

The first service indication information indicates a first network object, a first performance indicator range, and first tolerable unfulfilled duration for an intent. The first network object and the first performance indicator range may be attributes in an intent expression, and the first tolerable unfulfilled duration may be an attribute in the intent expression, or may be a separate information element. This is not particularly limited in this application.

It should be noted that the network object and the performance indicator range may refer to an intent expectation of the intent. For example, the network object and the performance indicator range may be two parameters or attributes in the intent expectation. In the following, sometimes, for ease of use, the network object and the performance indicator range are collectively referred to as the intent expectation. For example, modifying the intent expectation may refer to changing the network object, may refer to changing the performance indicator range, or may refer to changing both the network object and the performance indicator range. Details are not described below.

In addition, that a performance indicator value of the first network object is not within the first performance indicator range may be understood as that the intent is not met, or a first intent expectation of the intent is not met. The first intent expectation is an intent expectation including the first performance indicator value and the first network object. In the following, the foregoing descriptions are used to express similar meanings. Details are not described below.

In a possible implementation, the consumption network element may determine maximum tolerable duration in which the intent is not met and that is acceptable, and set the maximum tolerable duration as the first tolerable unfulfilled duration. For example, the consumption network element may determine, based on information such as a running status of a network system, an importance degree of the intent, or a requirement of a user, maximum duration of tolerable unfulfilled duration in which the intent is not met and that is acceptable, for example, two hours or three days. Therefore, in a process of determining the management action group, the production network element may consider a requirement of the consumption network element on tolerable unfulfilled duration, to enhance user experience.

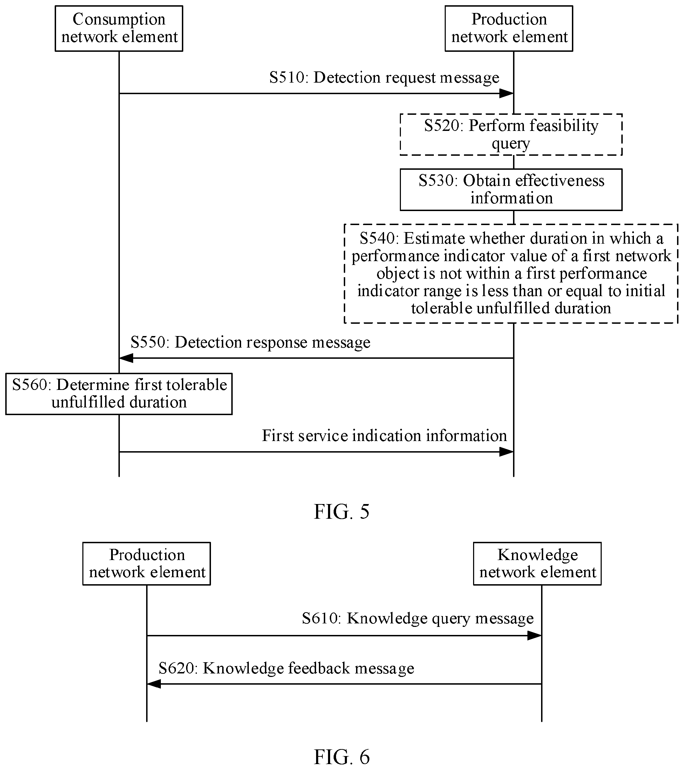

In another possible implementation, the consumption network element may perform a detection procedure. For example, the consumption network element may send a detection request message to the production network element before step S310, and receive, from the production network element, a detection feedback message in response to the detection request message, so that the consumption network element may determine the tolerable unfulfilled duration based on the detection feedback message. Therefore, the tolerable unfulfilled duration can be accurately set, to further enhance intent execution reliability. For a more detailed implementation process, refer to the following descriptions in FIG. 5. Details are not described herein.

The consumption network element may send the first service indication information to the production network element in a same message. In a possible implementation, the production network element receives an intent management request message from the network management service consumption network element. The intent management request message includes the first service indication information. Optionally, the intent management request message is any one of the following messages: a request message to create an intent, a request message to modify an intent, and a request message to activate an intent.

For example, the consumption network element may send the first service indication information in the intent creation request message. The first service indication information includes the first network object, the first performance indicator range, and the first tolerable unfulfilled duration. Therefore, in a process in which the production network element executes the intent based on the intent creation request message, each time the management action group is selected, the production network element may perform selection based on the first tolerable unfulfilled duration, to improve the intent execution reliability.

Optionally, the consumption network element may send the first service indication information in different messages. For example, the consumption network element may send the first network object and the first performance indicator range in the intent creation request, and send the first tolerable unfulfilled duration in an intent fulfillment constraint request message.

Optionally, a knowledge network element is configured with effectiveness information. The effectiveness information includes effectiveness consumption duration corresponding to each candidate management action group in a plurality of candidate management action groups used to implement the intent, where the effectiveness consumption duration is duration consumed by a corresponding candidate management action group to take effect after the corresponding candidate management action group is configured in the network object, and/or an effectiveness gain of each candidate management action group in the plurality of candidate management action groups, where the effectiveness gain indicates a change that is of or an effect that can be generated by a performance indicator value and that is generated after the candidate management action group is applied to the first network object. If the knowledge network element and the production network element are deployed on one device, or the knowledge network element is a submodule of the production network element, the production network element can obtain the effectiveness information from the knowledge network element through an internal interface. If the production network element and the knowledge network element are deployed on different devices respectively, the knowledge network element may perform the following step S320 and/or step S330 to obtain the effectiveness information.

Optionally, in S320, the production network element obtains the effectiveness consumption duration corresponding to each candidate management action group in the plurality of candidate management action groups.

Optionally, the production network element obtains the effectiveness information. The effectiveness information includes the effectiveness consumption duration corresponding to each candidate management action group in the plurality of candidate management action groups used to implement the intent.

At least one management action group used to implement the intent may refer to an optional management action group. For example, the production network element obtains the candidate management action group by translating the intent expression of the intent.

The effectiveness consumption duration may refer to duration consumed from time when the management action group is applied to a corresponding network object or information about the management action group is configured to a corresponding network object to time when a performance indicator value of the network object reaches a stable value. For example, the effectiveness information may include an effectiveness consumption duration parameter. For example, in the optional management action group #1 to management action group #4 of the intent, the effectiveness consumption duration parameter is configured as 30 minutes for the management action group #1, the effectiveness consumption duration parameter is configured as 10 minutes for the management action group #2, the effectiveness consumption duration parameter is configured as 5 minutes for the management action group #3, and the effectiveness consumption duration parameter is configured as 50 minutes for the management action group #4. Therefore, different management action groups may have different effectiveness consumption duration. Based on this technical solution, the effectiveness consumption duration parameter may be used to select the management action group. For example, the production network element may select a management action group whose effectiveness consumption duration is the shortest from the management action groups for execution, to improve user experience.

Optionally, in S330, the production network element obtains the effectiveness gain corresponding to each candidate management action group in the plurality of candidate management action groups.

Optionally, the production network element obtains the effectiveness information. The effectiveness information includes the effectiveness gain corresponding to each candidate management action group in the plurality of candidate management action groups. The effectiveness gain may be a change that is of a performance indicator value and that is generated after the corresponding candidate management action group is applied to the first network object.

For example, the effectiveness information may include an effectiveness gain parameter. For example, the management action group #1 can increase the performance indicator value of the network obj ect by 20%, the management action group #2 can increase the performance indicator value of the network object by 15%, the management action group #3 can increase the performance indicator value of the network object by 10%, and the management action group #4 can increase the performance indicator value of the network object by 30%. Therefore, when selecting the management action group, the production network element may further perform selection based on the effectiveness gain corresponding to each management action group, so that reliability of selecting the management action group by the production network element can be improved.

Optionally, the production network element may comprehensively consider the effectiveness consumption duration and the effectiveness gain. When the effectiveness consumption duration is the same, a management action group with a larger effectiveness gain is selected. When effectiveness gains are the same, a management action group with shorter effectiveness consumption duration is selected.

It may be understood that the effectiveness information may indicate, in a plurality of manners, for example, in a percentage form of the effectiveness gain parameter, the effectiveness gain corresponding to each management action group. The effectiveness gain may alternatively be a range that can be reached by the performance indicator value of the network object after the management action group is configured on the network object. A form of the effectiveness gain is not specifically limited in this application.

It should be noted that the production network element may obtain the effectiveness information by querying the knowledge network element, to save storage space of the production network element. For a more detailed implementation process, refer to the following descriptions in FIG. 6, and details are not described herein.

Optionally, in S340, the production network element obtains second service indication information.

For example, the consumption network element sends the second service indication information to the production network element, and accordingly, the production network element receives the second service indication information from the consumption network element.

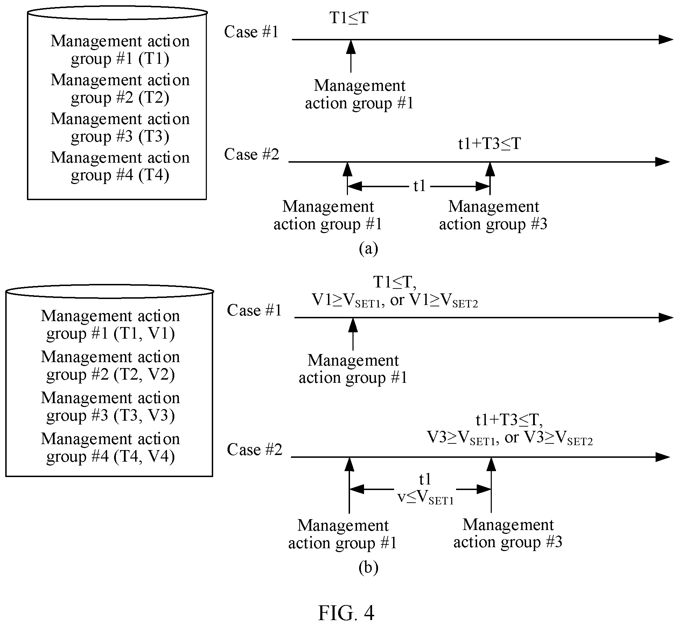

The second service indication information indicates a second performance indicator range of a network management service intent. The second performance indicator range is a range that is of the performance indicator value of the first network object and that is tolerable to the network management service consumption network element when the performance indicator value of the first network object is not within the first performance indicator range. Then, the production network element may select a second management action group based on a second performance indicator, and configure or deploy the first network object based on the second management action group, so that the performance indicator value of the first network object reaches the second performance indicator range. A manner in which the production network element selects the second management action group and configures information about the second management action group is similar to a manner in which the production network element selects a first management action group and configures information about the first management action group. Refer to descriptions of the following step S350 and FIG. 4. Details are not described herein.

In a possible implementation, the consumption network element may send the second service indication information and the first service indication information together to the production network element. For example, the consumption network element sends an intent creation request to the production network element. The intent creation request includes the first service indication information and the second service indication information, and may implicitly indicate that the second service indication information is a candidate. For example, the intent expression includes the first network object, the first performance indicator range, the first tolerable unfulfilled duration, and the second performance indicator range. The second performance indicator range may be in the intent expression, or may be a separate information element. This is not particularly limited in this application.

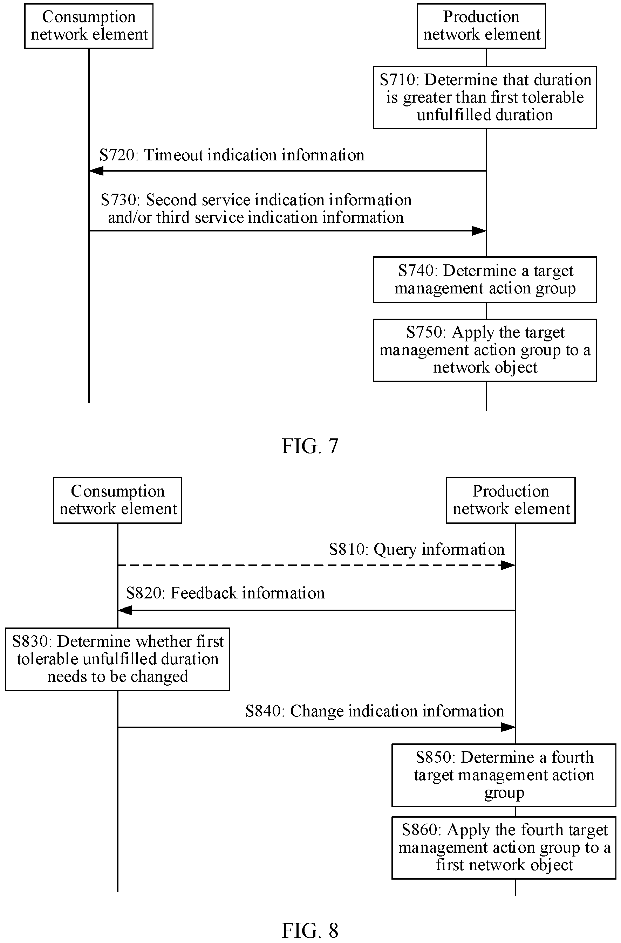

In another possible implementation, the consumption network element may send the second service indication information to the production network element in a process in which the intent is applied to the first network object. For a specific implementation, refer to the following descriptions in FIG. 7. Details are not described herein.

Optionally, in S350, the production network element obtains third service indication information.

For example, the consumption network element sends the third service indication information to the production network element, and accordingly, the production network element receives the third service indication information from the consumption network element.

The third service indication information indicates a second network object of the network management service intent. The second network object is a network object whose performance indicator value is within the first performance indicator range and that is determined by the network management service consumption network element when the performance indicator value of the first network object is not within the first performance indicator range. For example, the first network object is a network device in a first area. If a performance indicator value of the network device in the first area cannot reach the first performance indicator range, the consumption network element may indicate one second network object, for example, a network device in another area, so that the production network element may select a third management action group based on the second network object, and configure or deploy the second network object based on the third management action group, to enable a performance indicator value of the second network object to reach the first performance indicator range. A manner in which the production network element configures or deploys the second network object based on the third management action group is similar to a manner in which the production network element selects the first management action group and configures or deploys the first network object based on the first management action group. Refer to the following descriptions of step S350 and FIG. 4. Details are not described herein.

In a possible implementation, the consumption network element may send the third service indication information and the first service indication information together to the production network element. For example, the consumption network element sends an intent creation request to the production network element. The intent creation request includes the first service indication information and the third service indication information, and may implicitly indicate that the third service indication information is a candidate. For example, the intent expression includes the first network object, the first performance indicator range, the first tolerable unfulfilled duration, and the second network object. The second network object may be in the intent expression, or may be a separate information element. This is not particularly limited in this application.

In another possible implementation, the consumption network element may send the third service indication information to the production network element in a process in which the intent is executed. For a specific implementation, refer to the following descriptions in FIG. 7. Details are not described herein.

Optionally, the production network element may alternatively send a second intent expectation to the consumption network element. The second intent expectation includes the second performance indicator range and/or the second network object.

For example, the consumption network element may send two intent expectation information instances to the production network element. One of the two instances is a first intent expectation information instance of the intent, for example, an intent expectation information instance included in the intent expression, or an intent expectation information instance initially determined by the consumption network element. It may be understood that duration in which an expected intent indicated by the first service indication information is not met is less than or equal to the first tolerable unfulfilled duration. That the intent is not met means that the first intent expectation information instance is not met, or that the performance indicator value of the network object does not meet a preset range in the first intent expectation information instance, that is, a range indicated by a first performance indicator information instance in the first intent expectation information instance. The other intent expectation is a second intent expectation information instance. In other words, if the first intent expectation information instance cannot be met, or the first intent expectation information instance cannot be met within the first tolerable unfulfilled duration, the production network element may select a management action group that enables the intent to meet the second intent expectation.

The second intent expectation information instance may be used to change one or more parameters in the first intent expectation information instance. For example, the intent expectation includes three parameters or attributes: a performance indicator range and a network object, and optionally, may further include an expected context. For example, the first intent expectation information instance is that a proportion of network devices whose uplink and downlink throughputs are less than 5 Mbps in the first area is expected to be less than 10%. A constraint indicated by an expected context information instance may be the first area. A network object information instance may refer to the network device in the first area. A performance indicator range information instance may include two parameters, where one parameter is that the uplink and downlink throughputs are less than 5 Mbps, and the other parameter is that the proportion of the network devices is less than 10%. Performance indicator ranges are less than 5 Mbps and less than 10% respectively. In this case, the second intent expectation information instance may be used to change any one or more parameters thereof. For example, the second intent expectation information instance may be used to change the expected context information instance, for example, change a coverage area of the first area. The second intent expectation information instance may alternatively be used to change the network object information instance, for example, change a type of the network device in the first area. The second intent expectation information instance may alternatively be used to change the performance indicator range information instance, for example, change 5 Mbps to 8 Mbps, or 10% to 15%.

It may be understood that, a parameter or an attribute included in the second intent expectation may indicate a changed value. For example, a second performance indicator range information instance indicates that a changed second performance indicator range is less than 8 Mbps, or may indicate a changed difference. For example, the second performance indicator range information instance indicates a value or proportion by which a changed end value is increased in comparison with the first performance indicator range information instance. This is not particularly limited in this application.

It may be further understood that, in comparison with the first intent expectation information instance, for the second intent expectation information instance, one or more of a plurality of parameters or attributes are changed.

Therefore, the production network element may obtain the second intent expectation information instance from a creation request message sent by the consumption network element, or the production network element may obtain the second intent expectation information instance in a process in which the intent is applied to the network object. For example, if the duration in which the intent is not met is already greater than the first tolerable unfulfilled duration, the production network element may send timeout indication information to the consumption network element. The timeout indication information indicates that the duration in which the intent is not met is greater than the first tolerable unfulfilled duration. Therefore, the consumption network element may send information about the second intent expectation, that is, the second service indication information and/or the third service indication information, to the production network element in response to the timeout indication information. For a more detailed implementation process, refer to the following descriptions in FIG. 7. Details are not described herein.

S360: The production network element determines a first target management action group based on the first service indication information.

During a period in which the first target management action group is applied to the first network object, the first target management action group is used to enable duration in which the performance indicator value of the first network object is not within the first performance indicator range to be less than or equal to the first tolerable unfulfilled duration. It may be understood that the production network element may determine, based on the first service indication information of the intent, which management action group in a plurality of management action groups can enable the intent to be met, to determine the management action group as the first target management action group, and configure or deploy a corresponding network object based on the first target management action group.

It may be understood that, that the production network element determines the first target management action group may be understood as that, in an entire process in which the intent is executed, the production network element may determine, based on the first service indication information, a management action group to be executed. For example, the production network element may determine, based on the first service indication information, the management action group to be executed when determining, for the first time, the management action group to be executed. Alternatively, in the process in which the intent is executed, for example, when the performance indicator of the network object decreases due to a change in a network environment and the intent is no longer met, the production network element may determine, based on the first service indication information, the management action group to be executed.

It should be noted that, if the production network element further obtains the second service indication information and/or the third service indication information, and the second service indication information and/or the third service indication information indicate/indicates a candidate second intent expectation of the intent, the production network element may further consider the candidate second intent expectation when selecting the management action group to be executed. For example, when selecting the management action group, a second network element may consider both the first tolerable unfulfilled duration in the first service indication information and the second performance indicator range in the second service indication information. Alternatively, for another example, if the production network element may determine that the optional management action groups cannot meet the first intent expectation within the first tolerable unfulfilled duration, the production network element may select, based on the second service indication information, a management action group that can enable the intent to meet the candidate second intent expectation. Alternatively, for still another example, if duration in which the intent continuously does not meet an initial intent expectation already exceeds the first tolerable unfulfilled duration, the production network element selects the management action group that can enable the intent to meet the candidate second intent expectation.

For more detailed examples of how the production network element determines the first target management action group based on the first service indication information and how the production network element determines the first target management action group based on the first service indication information, and the effectiveness information, refer to the following descriptions with reference to FIG. 4. Details are not described herein.

Optionally, in S370, the production network element applies the first target management action group to the first network object.

In other words, the production network element configures or deploys the first network object based on the first target management action group.

The first network object that is configured or deployed may also be referred to as a managed entity.

In a possible manner, the first target management action includes a plurality of instructions, the plurality of instructions may be executed by one network device, or may be executed by a plurality of network devices, and a network device configured to execute the plurality of instructions is the first network object.

For example, the production network element may generate one or more instructions or commands of a target management action group, and separately send the plurality of instructions or commands to a network device to which the intent is applied. After receiving corresponding instructions or commands, the network device performs a corresponding action. It may be understood that different network devices may perform a same action, or may perform different actions. This is not particularly limited in this application.

Optionally, in S380, the production network element sends fulfillment information to the consumption network element, and accordingly, the consumption network element receives the fulfillment information from the production network element.

In a first possible implementation, if the production network element determines the first target management action based on the first service indication information, to enable the first network object to meet content indicated by first service information, the fulfillment information may indicate at least one of the following fulfillment results: information about whether the performance indicator value of the first network object reaches the first performance indicator range, and the performance indicator value of the first network object.

Optionally, the fulfillment information may further indicate whether the intent meets the first intent expectation.

In a second possible implementation, if the production network element receives the second service indication information, and determines a second target management action group based on the second service indication information, to enable the first network object to meet content indicated by second service information, the fulfillment information may indicate whether the performance indicator value of the first network object reaches the second performance indicator range.

In a third possible implementation, if the production network element receives the third service indication information, and determines a third target management action group based on the third service indication information, to enable the second network object to meet content of the third service indication information, the fulfillment information may indicate whether the performance indicator value of the second network object reaches the first performance indicator range.

Optionally, the fulfillment information indicates whether the intent meets the candidate second intent expectation.

For example, the production network element may report, to the consumption network element, whether the intent is met. More specifically, the production network element may report, to the consumption network element, whether the intent meets the first intent expectation, or may report, to the consumption network element, whether the intent meets the second intent expectation. Alternatively, the production network element may report fulfillment information of the network object to the consumption network element, where the fulfillment information indicates a current performance indicator value, so that the consumption network element can determine, based on the fulfillment information, whether the performance indicator value of the network object meets the first performance indicator range, and may also determine, based on the fulfillment information, whether the performance indicator value of the network object meets the second performance indicator range. Then, the consumption network element can learn of a status of whether the intent is met and a running status of the network object based on the fulfillment information, to improve user experience.

In the foregoing descriptions, the production network element may select the management action group based on the first tolerable unfulfilled duration indicated by the first service indication information, and the second service indication information and/or the third service indication information. In a possible implementation, the consumption network element may change the first tolerable unfulfilled duration in the first service indication information based on an actual running status of the network object in the process in which the intent is executed. For example, the consumption network element may send a query message to the production network element, and the production network element sends feedback information to the consumption network element in response to the query message. The feedback information indicates at least one of the following: the effectiveness consumption duration corresponding to each candidate management action group in the plurality of candidate management action groups, the effectiveness gain corresponding to each candidate management action group in the plurality of candidate management action groups, the duration in which the performance indicator value of the first network object is not within the first performance indicator range, and the performance indicator value of the first network object. Then, the consumption network element may determine, based on the feedback information, whether the first tolerable unfulfilled duration and/or the intent expectation need/needs to be changed. If the first tolerable unfulfilled duration and/or the intent expectation need/needs to be changed, the consumption network element may send change indication information to the production network element. The change indication information indicates to change the first tolerable unfulfilled duration to second tolerable unfulfilled duration. For a more detailed implementation, refer to the following descriptions about FIG. 8. Details are not described herein.

Based on this technical solution, in an entire process in which the intent is applied to the network object, the production network element may select an appropriate management action group for execution based on that duration in which an expectation indicated by the consumption network element is not met is less than or equal to the first tolerable unfulfilled duration, and effectiveness consumption duration of each management action group indicated by the effectiveness information. In other words, in a process of selecting the management action group, the production network element comprehensively considers a requirement of the consumption network element and the effectiveness consumption duration and effectiveness gain of each management action group, to enable a mechanism for selecting the management action group to be more proper, enable the network management service intent to be better executed, and enable the network management service production network element to provide a higher-quality network management service.

For ease of understanding a manner in which the production network element determines the first target management action group in the plurality of management action groups, the following provides descriptions with reference to FIG. 4.

FIG. 4 is an illustrative diagram of a manner of determining a first target management action group by a production network element according to an embodiment of this application.

First, an example in which the production network element determines a management action group based on first tolerable unfulfilled duration indicated by first service indication information and effectiveness consumption duration corresponding to each candidate management action group in a plurality of candidate management action groups is used for description. Refer to (a) in FIG. 4. It is assumed that the first service indication information indicates first tolerable unfulfilled duration T, a management action group #1 to a management action group #4 are optional management action groups, the management action group #1 is configured with effectiveness consumption duration T1, the management action group #2 is configured with effectiveness consumption duration T2, the management action group #3 is configured with effectiveness consumption duration T3, and the management action group #4 is configured with effectiveness consumption duration T4. Case #1 indicates a scenario in which the production network element selects the management action group for the first time. The production network element may select the management action group #1 whose effectiveness consumption duration is less than or equal to the first tolerable unfulfilled duration (T1≤T). It may be understood that if there are a plurality of management action groups whose effectiveness consumption duration is less than or equal to the first tolerable unfulfilled duration, the production network element may select a management action group whose effectiveness consumption duration is the shortest as a first target management action group, to improve user experience.

Case #2 indicates a scenario in which the production network element does not select the management action group for the first time. For example, the production network element selects, for the first time, the management action group #1 for execution. After time t1, where optionally the time t1 may be greater than or equal to the effectiveness consumption duration of the management action group #1, the production network element detects that a performance indicator value of a first network object still does not reach a first performance indicator range. In this case, the production network element may select a management action group again for execution. It may be understood that, because duration in which an intent is continuously not met already exceeds the time t1, the production network element may select the management action group #3 whose effectiveness consumption duration is less than or equal to remaining duration (t1+T3≤T) for execution. The remaining duration (T-t1) is obtained by subtracting the duration in which the intent is not met from the first tolerable unfulfilled duration. It may also be understood that, if there are a plurality of management action groups whose effectiveness consumption duration is less than or equal to the remaining duration, the production network element may select a management action group whose effectiveness consumption duration is the shortest as the first target management action group.

It should be noted that, in the foregoing example, that effectiveness information includes effectiveness consumption duration of each management action group is used as an example. If the effectiveness information further includes a range that each management action group enables, in corresponding effectiveness consumption duration, a performance indicator value of a network object to reach, for example, the effectiveness information includes an effectiveness gain parameter, the management action group #1 can enable, in the effectiveness consumption duration T1, the performance indicator value of the network object to reach V1, the management action group #2 can enable, in the effectiveness consumption duration T2, the performance indicator value of the network object to reach V2, the management action group #3 can enable, in the effectiveness consumption duration T3, the performance indicator value of the network object to reach V3, and the management action group #4 can enable, in the effectiveness consumption duration T4, the performance indicator value of the network object to reach V4. In this case, the production network element may consider an effectiveness gain parameter of each management action group when selecting the management action group. For example, a first performance indicator range in a first intent expectation indicates that the performance indicator value of the network object is expected to be greater than or equal to V. Although not shown in the figure, in case #1, the management action group #1 whose effectiveness consumption duration is less than or equal to the first tolerable unfulfilled duration and that can enable the performance indicator value of the network object to reach V (T1≤T, and V1≥V) may be selected as the first target management action group. If there are a plurality of management action groups that meet both the first tolerable unfulfilled duration and the first intent expectation, the production network element may select a management action group whose effectiveness consumption duration is the shortest, to enable the intent to be quickly fulfilled. Alternatively, the production network element may select a management action group whose gain is the largest, to enable quality of intent fulfillment to be improved. Alternatively, the production network element may perform a weighting operation on the duration and the gain to select the management action group. This is not particularly limited in this application. A selection mechanism in case #2 may be similar to that in case #1, and details are not described herein.

The following provides descriptions in which the production network element further obtains second service indication information, to be specific, obtains a candidate second performance indicator range of the intent, and in this case, the production network element may further consider the candidate second performance indicator range when selecting a management action group to be executed. Refer to (b) in FIG. 4. For example, the first performance indicator range indicates that the performance indicator value of the network object is expected to be greater than or equal to V_{SET1}, and the second performance indicator range indicates that the performance indicator value of the network object is expected to be greater than or equal to V_{SET2}. In case 1, the production network element may select, as the first target management action group, the management action group #1 whose effectiveness consumption duration is less than or equal to the first tolerable unfulfilled duration and that can enable the performance indicator value of the network object to reach the first performance indicator range (T1≤T, and V1≥V_{SET1}). If there is no management action group that can meet both the first tolerable unfulfilled duration and the first performance indicator range in the management action group #1 to the management action group #4, the production network element may select, as the first target management action group, a management action group whose effectiveness consumption duration is less than or equal to the first tolerable unfulfilled duration and that can enable the performance indicator value of the network object to reach the second performance indicator range (T1≤T, and V1≥V_{SET2}).

In case 2, the production network element selects, for the first time, the management action group #1 for execution. After the time t1, the production network element detects that the performance indicator value of the network object still does not reach the first performance indicator range in the first intent expectation. In this case, the production network element may select a management action group again for execution. For example, the production network element may select, for execution, the management action group #3 whose effectiveness consumption duration is less than or equal to the remaining duration and that can enable the performance indicator value of the network object to reach the first performance indicator range (t1+T3≤T, and V3≥V_{SET1}). The remaining duration (T-t1) is obtained by subtracting the duration in which the intent is not met from the first tolerable unfulfilled duration. If there is no management action group that can meet both the remaining duration and the first performance indicator range in the management action group #1 to the management action group #4, the production network element may select, as the first target management action group, a management action group whose effectiveness consumption duration is less than or equal to the remaining duration and that can enable the performance indicator value of the network object to reach the second performance indicator range (t1+T3≤T, and V3≥V_{SET2}).

In case #2, in another possible implementation, after the time t1, the production network element detects that the performance indicator value of the network object still does not reach the first performance indicator range in the first intent expectation, and t1 is already greater than or equal to the first tolerable unfulfilled duration (t1≥T). In this case, the production network element may select, for execution, a management action group with the shortest effectiveness consumption duration in management action groups that can enable the performance indicator value of the network object to reach the second performance indicator range.

In the foregoing example, when selecting the management action group, the production network element considers an indication of the consumption network element, for example, the first service indication information and the second service indication information, and considers the effectiveness information of the management action group, for example, the effectiveness consumption duration and the effectiveness gain, so that intent execution reliability can be improved. It should be noted that a mechanism for selecting the management action group by the production network element is not particularly limited in this application, and another manner of selecting the management action group based on the foregoing information still falls within the protection scope of this application.

With reference to FIG. 5, the following describes a manner of determining the first tolerable unfulfilled duration by the consumption network element based on the detection procedure in step S310 in FIG. 3.

FIG. 5 is a schematic flowchart of a method for determining first tolerable unfulfilled duration by a consumption network element based on a detection procedure according to an embodiment of this application.

S510: The consumption network element sends a detection request message to a production network element, and accordingly, the production network element receives the detection request message from the consumption network element.

The detection request message may be used to request to estimate whether an intent can be met. For example, the detection request message may include an initial network object, an initial performance indicator range, and the initial tolerable unfulfilled duration, so that the production network element determines whether duration in which a performance indicator value of the initial network object is not within the initial performance indicator range can be less than or equal to the initial tolerable unfulfilled duration.

Optionally, the detection request message may further include an intent expression of the intent. Initial tolerable unfulfilled duration information may be an attribute (tolerance Duration) defined by an information object class (information object class, IOC) in the intent expression, or initial tolerable unfulfilled duration information may be an independent information element defined in the detection request message. This is not particularly limited in this application.

Optionally, in S520, the production network element performs feasibility query on the intent.

The production network element may perform feasibility check on information in an intent detection request message based on an intent template. For example, the production network element may perform semantic and syntax check on the intent expression, to determine whether the production network element can successfully perform translation and execution procedures subsequently. If the production network element determines that the translation and execution procedures can be performed based on the intent, or that the intent expression meets a specification of the template, the production network element may determine that the intent can be executed, and perform a subsequent step. If the production network element determines that the translation and execution procedures cannot be performed, or that the intent expression does not meet a specification of the intent template, the production network element may send a detection response message to the consumption network element. The detection response message indicates that the intent expression is incorrect. Optionally, the detection response message may further indicate which information element is incorrect, for example, syntax of initial duration information is incorrect. For example, the production network element may send, to the consumption network element, a detection request notification message in response to the detection request message. The detection request notification message carries the detection response message.

Optionally, a knowledge network element is configured with effectiveness information. The effectiveness information includes effectiveness consumption duration and/or an effectiveness gain of each management action group in at least one management action group of the intent. If the knowledge network element and the production network element are deployed on one device, or the knowledge network element is a submodule of the production network element, the production network element can obtain the effectiveness information from the knowledge network element through an internal interface. If the production network element and the knowledge network element are deployed on different devices, the knowledge network element may perform the following step S530 to obtain the effectiveness information.

S530: The production network element obtains the effectiveness information.

The effectiveness information includes the effectiveness consumption duration and/or the effectiveness gain of each management action group in the at least one management action group of the intent.

It may be understood that, the effectiveness information obtained by the production network element in step S530 has a same meaning as the effectiveness consumption duration obtained in step S320 and the effectiveness gain obtained in step S330 in FIG. 3. Step S530, step S320, and step S330 may be all performed. For example, the consumption network element and the production network element first perform a detection procedure shown in FIG. 5, but the production network element does not store the effectiveness information after obtaining the effectiveness information in step S530. In this case, the production network element may re-execute step S320 to obtain the effectiveness information in a subsequent intent creation procedure. It may be understood that, if the production network element obtains the effectiveness information in step S530 and stores the effectiveness information locally, step S320 may be omitted and is not performed again.

For a specific meaning of the effectiveness consumption duration and/or the effectiveness gain included in the effectiveness information, refer to the descriptions in step S320. For a more detailed implementation process of obtaining the effectiveness information by the production network element, refer to the following descriptions in FIG. 6. Details are not described herein.

Optionally, in S540, the production network element estimates whether duration in which a performance indicator value of a first network object is not within a first performance indicator range is less than or equal to the initial tolerable unfulfilled duration.

The production network element may estimate, based on the information in the detection request message and the effectiveness information, whether the intent can be met. For example, the production network element may determine, based on the intent expression in the detection request message, whether the intent can be fulfilled, or the production network element may further determine, based on the initial tolerable unfulfilled duration in the detection request message, whether the intent can be met within the initial tolerable unfulfilled duration, or whether duration in which the intent is continuously not met is greater than or equal to the initial tolerable unfulfilled duration.

It may be understood that the production network element may determine, based on an effectiveness consumption duration parameter and an effectiveness gain parameter in the effectiveness information, whether the intent can be met within the initial tolerable unfulfilled duration, or whether the duration in which the intent is continuously not met is greater than or equal to the initial tolerable unfulfilled duration. A specific determining manner is similar to the foregoing determining manner of selecting a management action group, and details are not described herein.

S550: The production network element sends the detection response message to the consumption network element, and accordingly, the consumption network element receives the detection response message from the production network element.

The detection response message includes at least one of the following information: information indicating effectiveness consumption duration corresponding to each candidate management action group in a plurality of candidate management action groups, information indicating an effectiveness gain corresponding to each candidate management action group in the plurality of candidate management action groups, information indicating estimated duration consumed for the performance indicator value of the first network object to reach the first performance indicator range, and information indicating whether the performance indicator value of the first network object can reach the first performance indicator range within the first tolerable unfulfilled duration.

S560: The consumption network element determines the first tolerable unfulfilled duration based on the detection response message.

The consumption network element may determine, based on a local requirement and the detection response message, that duration in which a received intent is not met is the first tolerable unfulfilled duration.

For example, if the detection response message indicates to estimate that the intent can be met within the initial tolerable unfulfilled duration, the consumption network element may determine that the initial tolerable unfulfilled duration is the first tolerable unfulfilled duration.

For another example, if the detection response message indicates to estimate needed duration in which the intent can be met, the consumption network element may determine the first tolerable unfulfilled duration with reference to the duration.

For still another example, if the detection response message includes the effectiveness information and information indicating that the intent cannot be met within the initial tolerable unfulfilled duration, the consumption network element may estimate, based on the effectiveness information, the needed duration in which the intent can be met, in other words, determine the first tolerable unfulfilled duration based on the effectiveness information.

Based on this technical solution, the consumption network element may perform a detection procedure before requesting to create the intent, so that the first tolerable unfulfilled duration can be determined based on the detection response message fed back by the production network element, to improve properness of setting the first tolerable unfulfilled duration and improve intent execution reliability.

The following describes, with reference to FIG. 6, the manner in which the production network element obtains the effectiveness consumption duration mentioned in step S320 and the manner in which the production network element obtains the effectiveness gain mentioned in step S330 in FIG. 3. It should be first noted that, because both the effectiveness consumption duration and the effectiveness gain are effectiveness features of the management action group, effectiveness information including the effectiveness consumption duration and/or the effectiveness gain is used for description in FIG. 6.

FIG. 6 is a schematic flowchart of a method for obtaining effectiveness information by a production network element according to an embodiment of this application.

S610: The production network element sends a knowledge query message to a knowledge network element, and accordingly, the knowledge network element receives the knowledge query message from the production network element.

The knowledge query message is used to request to query for the effectiveness information.

In a possible implementation, the query message includes an intent keyword of an intent, for example, information such as an identifier, a name, and a type of the intent that can enable the knowledge network element to find, based on the intent keyword, a management action group corresponding to the intent, effectiveness consumption duration of the management action group, and an effectiveness gain of the management action group.

S620: The knowledge network element sends a knowledge feedback message to the production network element, and accordingly, the production network element receives the knowledge feedback message from the knowledge network element.

The knowledge feedback message carries the effectiveness information. For example, the knowledge feedback message includes a group of information elements {<the management action group, an effectiveness consumption duration parameter, and an effectiveness gain parameter>}. The management action group may be specific operation instructions, or may be an operation identifier. This is not particularly limited in this application.

Based on this technical solution, the production network element may obtain the effectiveness information by querying the knowledge network element, and the production network element may not need to locally store a large amount of intent knowledge, to save storage space of the production network element.

With reference to FIG. 7, the following describes one manner of obtaining the second service indication information and the third service indication information by the production network element mentioned in steps S340 and S350 in FIG. 3.

FIG. 7 is a schematic flowchart of a method for obtaining second service indication information and/or third service indication information by a production network element according to an embodiment of this application.

S710: The production network element determines that duration in which an intent is not met is greater than first tolerable unfulfilled duration.

The production network element may locally set a timer, and the timer may be configured to record the duration in which the intent is not met.

For example, the production network element may set the timer t=0 when receiving a request message to create an intent from a consumption network element. When the timer reaches the first tolerable unfulfilled duration (t=T), the production network element may detect whether a performance indicator value of a network object reaches a first performance indicator range in a first intent expectation. If the performance indicator value of the network object reaches the first performance indicator range in the first intent expectation, the production network element may consider that the duration in which the intent is not met is less than or equal to the first tolerable unfulfilled duration. If a performance indicator of the network object does not reach the first performance indicator range in the first intent expectation, the production network element may consider that the duration in which the intent is not met is greater than the first tolerable unfulfilled duration.

For another example, the production network element may detect the network object based on time of a preset value. When it is initially detected that the performance indicator of the network object does not reach the first performance indicator range in the first intent expectation, the timer t=0 is set. In a subsequent detection process, if the performance indicator of the network object still does not reach the first performance indicator range, the timer continues timing. If the performance indicator of the network object reaches the first performance indicator range in subsequent detection, the timer is reset to zero, and re-timing is performed until it is detected again that the first performance indicator range is not reached. When it is detected for an N^{th} time that the performance indicator of the network object still does not reach the first performance indicator range, and the timer reaches the first tolerable unfulfilled duration (t=T), the production network element may consider that the duration in which the intent is not met is greater than the first tolerable unfulfilled duration, where N is a positive integer.

Optionally, detection time may be time that is after configuration of a management action group executed last time and that is after effectiveness consumption duration corresponding to the management action group.

S720: The production network element sends timeout indication information to the consumption network element, and accordingly, the consumption network element receives the timeout indication information from the production network element.

The timeout indication information indicates that the duration in which the intent is not met is greater than the first tolerable unfulfilled duration after a first target management action group is applied to a first network object.

Optionally, the timeout indication information may further include a performance indicator value reached by the current network object, the timeout indication information may further indicate reached duration in which the current intent is not met, the timeout indication information may further indicate to estimate duration in which the intent is met and that is further needed, the timeout indication information may further indicate a running status of the current network object, or the like. Therefore, the consumption network element can set an appropriate candidate second intent expectation based on the timeout indication information.

S730: The consumption network element sends the second service indication information and/or the third service indication information to the production network element, and accordingly, the production network element receives the second service indication information and/or the third service indication information from the consumption network element.

The second service indication information indicates a second performance indicator range, and the third service indication information indicates a second network object.

The consumption network element may set an appropriate second performance indicator range and/or second network object based on the timeout indication information, and the second performance indicator range and/or the second network object may be collectively referred to as a second intent expectation.

For example, the consumption network element may set an appropriate second intent expectation based on the timeout indication information. For example, change indication information indicates the performance indicator value reached by the current network object. The consumption network element may determine whether the current performance indicator value can be accepted, and if the current performance indicator value can be accepted, an expected target in the second intent expectation may be set as the performance indicator value. For another example, the change indication information indicates to estimate the duration in which the intent is met and that is further needed, and indicates the running status of the current network object. The consumption network element determines, based on the change indication information, whether an expected object can be changed for the current network object, and may change an expected object in the first intent expectation and use a changed expected object as the second intent expectation.

It may be understood that the second service indication information sent by the consumption network element to the production network element based on the change indication information may include a complete candidate intent expectation, or may include only a parameter that is changed in the candidate intent expectation in comparison with the first intent expectation. This is not particularly limited in this application.

In a possible implementation, the second service indication information may further indicate changed first tolerable unfulfilled duration. In other words, the consumption network element may alternatively re-determine, based on the change indication information, the first tolerable unfulfilled duration that duration in which an expected intent is not met is less than or equal to. This is not particularly limited in this application.

S740: The production network element determines a target management action group in a plurality of management action groups based on the second service indication information and/or the third service indication information.

If the production network element receives only the second service indication information indicating the second performance indicator range, the production network element may select the target management action group based on the second performance indicator range. If the production network element receives only the third service indication information indicating the second network object, the production network element may select the target management action group based on the second network object. If the production network element receives only the second service indication information and the third service indication information that indicate the second network object, the production network element may select the target management action group based on the second performance indicator range and the second network object.

For a manner in which the production network element selects the target management action group, refer to descriptions of step S360 in FIG. 3 and FIG. 4. Details are not described herein.

S750: The production network element applies the target management action group to the network object.

In other words, the production network element may configure or deploy the network object based on the target management action group.

If the production network element does not receive the third service indication information indicating the second network object, the production network element may apply the target management action group to the first network object. If the production network element receives the third service indication information indicating the second network object, the production network element may configure or deploy the second network object based on a selected target management action group. For descriptions that are more detailed, refer to the descriptions in step S370 in FIG. 3. Details are not described herein.

Based on this technical solution, the production network element may alternatively obtain the candidate second intent expectation in a process in which the intent is applied to the network object, and the consumption network element determines the candidate second intent expectation based on information fed back by the production network element, to enable the candidate second intent expectation to be set more properly, and improve intent execution reliability.

Because the change indication information indicates that the duration in which the intent is not met is already greater than the first tolerable unfulfilled duration, the consumption network element may re-determine the first tolerable unfulfilled duration based on the change indication information. In a possible implementation, the consumption network element may actively query, in a process in which the intent is executed, for an intent execution status, to determine whether the first tolerable unfulfilled duration needs to be changed. The following describes this with reference to FIG. 8.

FIG. 8 is a schematic flowchart of a method for changing first tolerable unfulfilled duration according to an embodiment of this application.

Optionally, in S810, a consumption network element sends query information to a production network element, and accordingly, the production network element receives the query information from the consumption network element.

The query information may indicate the production network element to return feedback information.

In a possible implementation, the query information may indicate at least one of the following: an intent identifier, an intent execution status returned by the production network element, and duration in which an intent is already not met and that is returned by the production network element.

The query information may request the production network element to feed back effectiveness information, and/or feed back network status information.

It should be noted that, the production network element may alternatively be configured to actively send the feedback information to the consumption network element, in other words, step S810 is an optional step.

S820: The production network element sends the feedback information to the consumption network element, and accordingly, the consumption network element receives the feedback information from the production network element.

The production network element may send the feedback information to the consumption network element in response to the query information.

If the query information requests the production network element to feed back the effectiveness information, the feedback information indicates at least one of the following: effectiveness consumption duration corresponding to each candidate management action group in a plurality of candidate management action groups, and an effectiveness gain corresponding to each candidate management action group in the plurality of candidate management action groups. If the query information requests the production network element to feed back the network status information, the feedback information may indicate at least one of the following: duration in which a performance indicator value of a first network object is not within a first performance indicator range, and the performance indicator value of the first network object.

For example, the production network element may generate the feedback information based on a value similar to that of the timer described in FIG. 7, for example, fill the value of the timer in a corresponding information element in a first query message. For another example, the production network element may generate the feedback information based on a performance indicator value that is of a network object and that is obtained through detection.

S830: The consumption network element determines, based on the feedback information, whether the first tolerable unfulfilled duration needs to be changed.

The consumption network element may determine, based on the feedback information and a set first tolerable unfulfilled duration, whether the first tolerable unfulfilled duration needs to be changed.

For example, the feedback information includes information indicating duration in which the intent is continuously not met. The consumption network element may determine, based on consumption of the first tolerable unfulfilled duration, whether the first tolerable unfulfilled duration needs to be changed. For example, if the first tolerable unfulfilled duration is about to be consumed completely, the consumption network element may appropriately increase the first tolerable unfulfilled duration. In other words, the first tolerable unfulfilled duration is changed to a larger second tolerable unfulfilled duration. For another example, the feedback information further includes a performance indicator value of a current network system. In this case, the consumption network element may further determine, based on the performance indicator value, whether to change the first tolerable unfulfilled duration. For example, there is a large difference between the performance indicator value and a preset range in an intent expectation, and in this case, the consumption network element may alternatively increase the first tolerable unfulfilled duration appropriately. A specific manner of modifying the first tolerable unfulfilled duration by the consumption network element is not particularly limited in this application.

In a possible implementation, the consumption network element may further modify the intent expectation based on the feedback information. For example, the consumption network element may determine to modify the intent expectation based on the performance indicator value of the current network system and an effectiveness gain parameter in the effectiveness information. A specific manner of modifying the intent expectation by the consumption network element is not particularly limited in this application.

S840: The consumption network element sends change indication information to the production network element, and accordingly, the production network element receives the change indication information from the consumption network element.

The change indication information indicates that the first tolerable unfulfilled duration is changed to the second tolerable unfulfilled duration.

In a possible implementation, if the consumption network element further determines that the intent expectation needs to be modified, the change indication information further indicates a modified intent expectation. The modified intent expectation may be obtained by modifying a first intent expectation or may be obtained by modifying a second intent expectation. This is not particularly limited in this application.

S850: The production network element determines a fourth target management action group in a plurality of management action groups based on the change indication information.

For example, the production network element may select the fourth target management action group based on the second tolerable unfulfilled duration and effectiveness consumption duration of each management action group in the plurality of management action groups. For a manner in which the production network element selects the fourth target management action group, refer to the descriptions of step S360 in FIG. 3 and FIG. 4. Details are not described herein.

S860: The production network element applies the fourth target management action to the first network object.

In other words, the production network element may configure or deploy the first network object based on the fourth target management action group.

It may be understood that if the change indication information further indicates that the network object is changed, the production network element may configure or deploy a changed network object based on the fourth target management action group. For descriptions that are more detailed, refer to the descriptions in step S370 in FIG. 3. Details are not described herein.

Based on this technical solution, the consumption network element may determine, based on an active query procedure and first feedback information returned by the production network element, whether the first tolerable unfulfilled duration needs to be changed, to improve properness of setting tolerable unfulfilled duration and improve intent execution reliability.

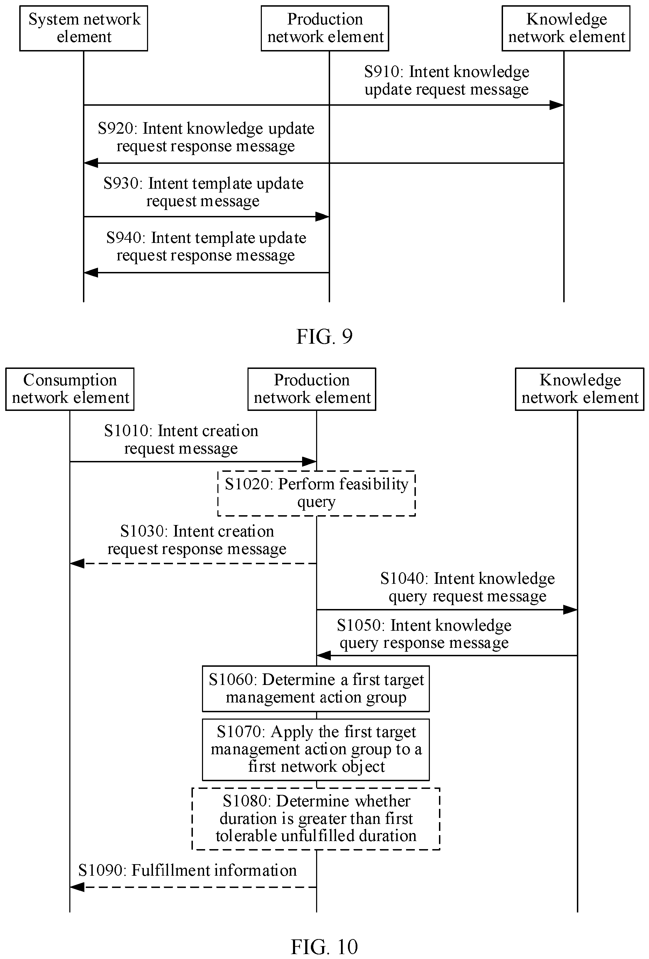

The foregoing describes a process in which the production network element may perform related intent processing based on the effectiveness information. The following describes a manner of configuring the effectiveness information with reference to FIG. 9.

FIG. 9 is a schematic flowchart of a method for configuring effectiveness information according to an embodiment of this application.

S910: A system network element sends an intent knowledge update request message to a knowledge network element, and accordingly, the knowledge network element receives the knowledge update request message from the system network element.

The knowledge update request message includes the effectiveness information, and the effectiveness information includes effectiveness consumption duration and/or an effectiveness gain of each management action group in at least one management action group used to implement an intent. For more detailed descriptions of the effectiveness information, refer to the description of step S320 in FIG. 3. Details are not described herein. For example, the intent knowledge update request message includes a management action group field, an effectiveness consumption duration parameter field, and an effectiveness gain parameter field.

S920: The knowledge network element sends an intent knowledge update request response message to the system network element, and accordingly, the system network element receives the intent knowledge update request response message from the knowledge network element.

The knowledge network element may send the intent knowledge update request response message to the system network element in response to the intent knowledge update request message. The intent knowledge update request response message may be used to feed back whether the effectiveness information is successfully updated.

In a possible implementation, the system network element may further configure an intent template for a production network element. The following provides descriptions with reference to step S930 and step S940.

S930: The system network element sends an intent template update request message to the production network element, and accordingly, the production network element receives the intent template update request message from the system network element.

The intent template update request message includes the intent template. The intent template is used to specify syntax and semantics of intent-related information, for example, specify syntax and semantics of the first service indication information, the second service indication information, and the third service indication information described above. For example, the intent template includes a standard duration template and/or a second intent expectation template. A tolerable unfulfilled duration template (for example, toleranceDurationSchema) is used to limit an expression of standard duration, for example, limit a type of a standard duration field, for example, a string type or an integer type. Optionally, the tolerable unfulfilled duration template may be further used to limit a value range of the standard duration field. An intent expectation template (alternativeExpectationSchema) is used to limit an expression of a second intent expectation field, for example, limit a type of the second intent expectation field, for example, a string type or an integer type. Optionally, the intent expectation template may be further used to limit a value range of the second intent expectation field.

S940: The production network element sends an intent template update request response message to the system network element, and accordingly, the system network element receives the intent template update request response message from the production network element.

The production network element may send the intent template update request response message to the consumption network element in response to the intent template update request message. The intent template update request message may be used to feed back whether the intent template is successfully configured.

It should be noted that, in FIG. 9, an example in which the knowledge network element and the production network element are deployed on different devices respectively is used for description. An implementation in which the knowledge network element and the production network element are deployed on one device, or the knowledge network element is a submodule of the production network element is similar to this. Details are not described herein.

Based on this technical solution, the knowledge network element and the production network element may obtain an intent template and effectiveness information that are needed in a process in which the intent is executed, to ensure reliable execution of a subsequent intent.

FIG. 3 to FIG. 9 describe an intent execution method according to embodiments of this application. For better understanding of embodiments of this application, the following describes one specific implementation with reference to FIG. 10.

FIG. 10 is a schematic flowchart of an example of an implementation method for executing an intent according to an embodiment of this application.

S 1010: A consumption network element sends an intent creation request message to a production network element, and accordingly, the production network element receives the intent creation request message from the consumption network element.

The intent creation request message may include first service indication information. The first service indication information indicates a first network object, a first performance indicator range, and first tolerable unfulfilled duration. Optionally, the intent creation request message may further include second service indication information. The second service indication information indicates a second performance indicator range of the intent. Optionally, the intent creation request message may further include third service indication information. The third service indication information indicates a second network object of the intent. For more detailed descriptions of the first service indication information, the second service indication information, and the third service indication information, refer to the foregoing descriptions of step S310, step S340, and step S350. Details are not described herein.

Optionally, in S 1020, the production network element performs feasibility query on the intent.

The production network element may perform semantic and syntax check on information in the intent creation request message, to determine whether the production network element can subsequently perform execution successfully. For example, the production network element queries for whether a first tolerable unfulfilled duration parameter in the first service indication information in the intent creation request message meets, for example, a specification of the intent template shown in FIG. 9. For another example, the production network element queries for whether the second performance indicator range in the second service indication information in the intent creation request message meets, for example, the specification of the intent template shown in FIG. 9. For another example, the production network element queries for whether the second network object in the third service indication information in the intent creation request message meets, for example, the specification of the intent template shown in FIG. 9.

It may be understood that the production network element may synchronously set a timer to start timing at this time.

Optionally, in S1030, the production network element sends an intent creation request response message to the consumption network element, and accordingly, the consumption network element receives the intent creation request response message from the production network element.

The production network element may send the intent creation request response message to the consumption network element in response to the intent creation request message. The intent creation response message may include creation status information. The creation status information indicates whether the intent is successfully created. For example, if the production network element determines that information in the intent creation request message meets the specification of the intent template, it indicates that the intent is successfully created. If the production network element determines that there is information that is in the intent creation request message and that does not meet the specification of the intent template, it indicates that the intent is not successfully created. Optionally, if the intent is not successfully created, the intent creation response message may further include creation failure cause information, for example, the first service indication information is incorrectly set, the second service indication information is incorrectly set, or the third service indication information is incorrectly set.

S1040: The production network element sends an intent knowledge query request message to a knowledge network element, and accordingly, the knowledge network element receives the intent knowledge query request message from the production network element.

The intent knowledge query request message may include knowledge query information. The knowledge query information is used for intent knowledge query. For descriptions that are more detailed, refer to the foregoing descriptions of step S610 in FIG. 6. Details are not described herein.

S1050: The knowledge network element sends an intent knowledge query response message to the production network element, and accordingly, the production network element receives the intent knowledge query response message from the knowledge network element.

The intent knowledge query response message includes a management action group and effectiveness information of the management action group. For descriptions that are more detailed, refer to the descriptions in step S620 in FIG. 6. Details are not described herein.

S1060: The production network element determines, based on the first service indication information, a first target management action group in at least one management action group used to implement the intent.

For descriptions that are more detailed, refer to the foregoing descriptions of step S360 in FIG. 3. Details are not described herein.

S1070: The production network element applies the first target management action group to the first network object.

For descriptions that are more detailed, refer to the foregoing descriptions of step S370 in FIG. 3. Details are not described herein.

Optionally, in S1080, the production network element determines whether duration in which the intent is not met is greater than the first tolerable unfulfilled duration.

The production network element may determine, by detecting a performance indicator value of a network system and through timing of the timer, whether the duration is greater than the first tolerable unfulfilled duration. For descriptions that are more detailed, refer to the foregoing descriptions of step S710 in FIG. 7. Details are not described herein.

For example, if the production network element determines that the intent is met, the production network element may continue to maintain a current status. If the production network element determines that the intent is not met, and the duration in which the intent is not met is less than or equal to the first tolerable unfulfilled duration indicated by the first service indication information, the production network element may select a management action group again based on the effectiveness information and a value of the timer for execution. If the production network element determines that the intent is not met, and the duration in which the intent is not met is greater than the first tolerable unfulfilled duration, the production network element may determine whether the performance indicator value of the network system meets the second performance indicator range indicated by the second service indication information. If the performance indicator value meets the second performance indicator range, the production network element continues to maintain the current status. If the performance indicator value does not meet the second performance indicator range, the production network element selects a management action group again based on the effectiveness information and the second performance indicator range for execution.

Optionally, in S1090, the production network element sends fulfillment information to the consumption network element, and accordingly, the consumption network element receives the fulfillment information from the production network element.

The fulfillment information indicates at least one of the following fulfillment results: information about whether a performance indicator value of the first network object reaches the first performance indicator range, the performance indicator value of the first network object, and information about whether the performance indicator value of the first network object reaches the second performance indicator range. For descriptions that are more detailed, refer to the foregoing descriptions of step S380 in FIG. 3. Details are not described herein.

Based on this technical solution, in an entire process in which the intent is applied to a network object, the network management service production network element may select, based on the first network object, the first performance indicator range, and the first tolerable unfulfilled duration that are indicated by the network management service consumption network element, a target management action group from a plurality of candidate management action groups of a network management service intent, and select a management action group that can enable the duration in which the performance indicator value of the first network object is not within the first performance indicator range to be less than or equal to the first tolerable unfulfilled duration during a period in which the network management service intent is applied to the first network object. In other words, in a selection process, a requirement of the network management service consumption network element on tolerable unfulfilled duration can be considered, to enable a mechanism for selecting the management action group to be more proper, enable the network management service intent to be better executed, and enable the network management service production network element to provide a higher-quality network management service.

The foregoing describes the method embodiments in embodiments of this application, and the following describes corresponding apparatus embodiments. It should be understood that descriptions of the apparatus embodiments correspond to the descriptions of the method embodiments, and therefore for a part that is not described in detail, refer to the foregoing method embodiments.

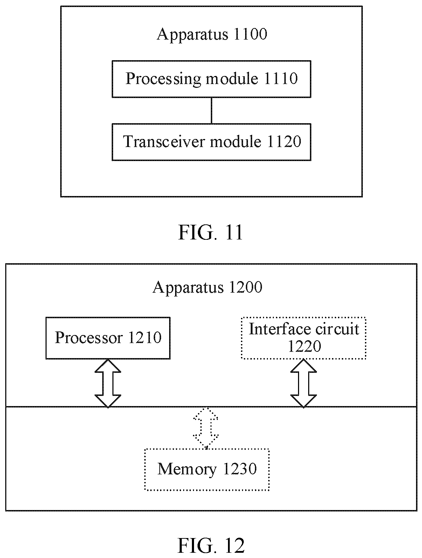

FIG. 11 and FIG. 12 each are a diagram of a possible structure of a communication apparatus according to an embodiment of this application. These communication apparatuses may be configured to implement functions of the network management service production network element and the network management service consumption network element in the method embodiments. Therefore, beneficial effects of the method embodiments can also be implemented. In this embodiment of this application, the communication apparatus may be a network management service production network element or a network management service consumption network element, or may be a module (for example, a chip) used in the network management service production network element or the network management service consumption network element.

As shown in FIG. 11, the communication apparatus 1100 includes a processing module 1110 and a transceiver module 1120. The communication apparatus 1100 is configured to implement functions of the network management service production network element and the network management service consumption network element in the method embodiments shown in FIG. 3 to FIG. 10. Alternatively, the communication apparatus 1100 may include a module configured to implement any function or operation of the network management service production network element or the network management service consumption network element in the method embodiments shown in FIG. 3 to FIG. 10. The module may be all or partially implemented by using software, hardware, firmware, or any combination thereof.

When the communication apparatus 1100 is configured to implement the functions of the network management service production network element in the method embodiments shown in FIG. 3 to FIG. 10, the transceiver module 1120 is configured to receive first service indication information from the network management service consumption network element. The first service indication information indicates a first network object, a first performance indicator range, and first tolerable unfulfilled duration for a network management service intent. The processing module 1110 is configured to determine a first target management action group based on the first service indication information, to execute the network management service intent. During a period in which the first target management action group is applied to the first network object, the first target management action group is used to enable duration in which a performance indicator value of the first network object is not within the first performance indicator range to be less than or equal to the first tolerable unfulfilled duration.

Based on this technical solution, in an entire process in which the intent is applied to a network object, the network management service production network element may select, based on the first network object, the first performance indicator range, and the first tolerable unfulfilled duration that are indicated by the network management service consumption network element, a management action group that can enable the duration in which the performance indicator value of the first network object is not within the first performance indicator range to be less than or equal to the first tolerable unfulfilled duration during a period in which the intent is applied to the first network object. In other words, in a selection process, a requirement of the network management service consumption network element on tolerable unfulfilled duration can be considered, to enable a mechanism for selecting the management action group to be more proper, enable the network management service intent to be better executed, and enable the network management service production network element to provide a higher-quality network management service.

For descriptions that are of the processing module 1110 and the transceiver module 1120 and that are more detailed, directly refer to related descriptions in the method embodiments shown in FIG. 3 to FIG. 10. Details are not described herein again.

When the communication apparatus 1100 is configured to implement the function of the network management service consumption network element in the method embodiments shown in FIG. 3 to FIG. 10, the processing module 1110 is configured to generate the first service indication information. The first service indication information indicates the first network object, the first performance indicator range, and the first tolerable unfulfilled duration for the network management service intent. The first tolerable unfulfilled duration is duration that is tolerable to the network management service consumption network element and in which the performance indicator value of the first network object is not within the first performance indicator range during a period in which the network management service intent is applied to the first network object. The transceiver module 1120 is configured to send the first service indication information to the network management service production network element.

Based on this technical solution, in an entire process in which the intent is applied to the first network object, the network management service consumption network element may indicate, to the network management service production network element, tolerable duration in which the performance indicator value of the first network object is not within the first performance indicator range, that is, the first tolerable unfulfilled duration. Then, the network management service production network element may select, based on the first tolerable unfulfilled duration indicated by the network management service consumption network element, an appropriate target management action group for configuration. In other words, in a process of selecting the target management action group, the network management service production network element can comprehensively consider a requirement of the network management service consumption network element, to enable a mechanism for selecting an intent operation to be more proper, enable the network management service intent of the network management service consumption network element to be better executed, and enable the network management service production network element to provide the higher-quality network management service.

For descriptions that are of the processing module 1110 and the transceiver module 1120 and that are more detailed, directly refer to related descriptions in the method embodiments shown in FIG. 3 to FIG. 10. Details are not described herein again.

As shown in FIG. 12, the communication apparatus 1200 includes a processor 1210 and an interface circuit 1220. The processor 1210 and the interface circuit 1220 are coupled to each other. It may be understood that the interface circuit 1220 may be a transceiver or an input/output interface. Optionally, the communication apparatus 1200 may further include a memory 1230, configured to: store instructions to be executed by the processor 1210, store input data needed by the processor 1210 to run instructions, or store data generated after the processor 1210 runs instructions.

When the communication apparatus 1200 is configured to implement the method shown in FIG. 3 to FIG. 10, the processor 1210 is configured to implement a function of the processing module 1110, and the interface circuit 1220 is configured to implement a function of the transceiver module 1120.

When the communication apparatus is a chip used in a network management service production network element, the chip of the network management service production network element implements the function of the network management service production network element in the method embodiments. The chip of the network management service production network element receives information from another module (for example, a radio frequency module or an antenna) in the network management service production network element, and the information is sent by the network management service consumption network element to the network management service production network element. Alternatively, the chip of the network management service production network element sends information to another module (for example, a radio frequency module or an antenna) in the network management service production network element, and the information is sent by the network management service production network element to the network management service consumption network element.

When the communication apparatus is a chip used in a network management service consumption network element, the chip of the network management service consumption network element implements the function of the network management service consumption network element in the method embodiments. The chip of the network management service consumption network element receives information from another module (for example, a radio frequency module or an antenna) in the network management service consumption network element, and the information is sent by the network management service production network element to the network management service consumption network element. Alternatively, the chip of the network management service consumption network element sends information to another module (for example, a radio frequency module or an antenna) in the network management service consumption network element, and the information is sent by the network management service production network element to the network management service consumption network element.

It may be understood that the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The memory in this embodiment of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of storage medium well known in the art. For example, a storage medium is coupled to a processor, so that the processor can read information from the storage medium and write information into the storage medium. Certainly, the storage medium may further be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the embodiments may be implemented by using software, hardware, firmware, or any combination thereof. When the software is used to implement the embodiments, all or some of the embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, a terminal device, or another programmable apparatus. The computer programs or instructions may be stored in a computer-readable storage medium, or may be transmitted through a computer-readable storage medium. The computer-readable storage medium may be any usable medium accessible by the computer, or a data storage device such as a server integrating one or more usable media. The usable medium may be a magnetic medium, for example, a floppy disk, a hard disk drive, or a magnetic tape, may be an optical medium, for example, a DVD, or may be a semiconductor medium, for example, a solid-state drive (solid state disk, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that, in embodiments of this application, numbers "first", "second", and the like are merely for distinguishing between different objects, for example, to distinguish between different network devices, and do not constitute a limitation on the scope of embodiments of this application. Embodiments of this application are not limited thereto.

It should be further understood that all indication manners of the indication information in this specification may be direct indications or indirect indications, and the indication manner may be a direct indication or an indirect indication. It may be understood that, in this application, the indirect indication, for example, that A indirectly indicates C, may be implemented by indicating B by A, and a correspondence between B and C. The correspondence between B and C may be predefined in a protocol or preconfigured, and is not limited herein. For example, the consumption network element may directly indicate a first network object, a parameter value of a first performance indicator range, and a parameter value of first tolerable unfulfilled duration, or the consumption network element may fill an intent expectation in a preset information field. The production network element may determine the first network object, the parameter value of the first performance indicator range, and the parameter value of the first tolerable unfulfilled duration based on the intent expectation, so that a transmission resource can be reduced. This is not particularly limited in this application.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A network management service intent execution method, wherein the method comprises:
receiving, by a network management service production network element, first service indication information from a network management service consumption network element, wherein the first service indication information indicates a first network object, a first performance indicator range, and first tolerable unfulfilled duration for a network management service intent; and
determining, by the network management service production network element, a first target management action group based on the first service indication information, to execute the network management service intent, wherein during a period in which the first target management action group is applied to the first network object, the first target management action group is used to enable duration in which a performance indicator value of the first network object is not within the first performance indicator range to be less than or equal to the first tolerable unfulfilled duration.

2. The method according to claim 1, wherein the receiving, by a network management service production network element, first service indication information from a network management service consumption network element comprises:
receiving, by the network management service production network element, an intent management request message from the network management service consumption network element, wherein the intent management request message comprises the first service indication information.

3. The method according to claim 2, wherein the intent management request message is any one of the following messages: a request message to create an intent, a request message to modify an intent, and a request message to activate an intent.

4. The method according to any one of claims 1 to 3, wherein the determining, by the network management service production network element, a first target management action group comprises:
obtaining, by the network management service production network element, effectiveness consumption duration corresponding to each candidate management action group in a plurality of candidate management action groups of the network management service intent, wherein the effectiveness consumption duration indicates duration consumed by the candidate management action group to take effect after the candidate management action group is applied to the first network object; and
determining, by the network management service production network element, the first target management action group in the plurality of candidate management action groups based on the first tolerable unfulfilled duration and the effectiveness consumption duration corresponding to each candidate management action group in the plurality of candidate management action groups.

5. The method according to claim 4, wherein the determining, by the network management service production network element, the first target management action group based on the first tolerable unfulfilled duration and the effectiveness consumption duration corresponding to each candidate management action group in the plurality of candidate management action groups comprises:
obtaining, by the network management service production network element, an effectiveness gain corresponding to each candidate management action group in the plurality of candidate management action groups, wherein the effectiveness gain indicates a change that is of the performance indicator value and that is generated after the candidate management action group is applied to the first network object; and
determining, by the network management service production network element, the first target management action group based on the first tolerable unfulfilled duration, the first performance indicator range, and the effectiveness consumption duration and the effectiveness gain that correspond to each candidate management action group in the plurality of candidate management action groups.

6. The method according to any one of claims 1 to 5, wherein the method further comprises:
receiving, by the network management service production network element, second service indication information from the network management service consumption network element, wherein the second service indication information indicates a second performance indicator range of the network management service intent;
determining, by the network management service production network element, that after the first target management action group is applied to the first network object, the duration in which the performance indicator value of the first network object is not within the first performance indicator range is greater than the first tolerable unfulfilled duration; and
determining, by the network management service production network element, a second target management action group based on the second service indication information, to execute the network management service intent, wherein during a period in which the second target management action group is applied to the first network object, the second target management action group is used to enable the performance indicator value of the first network object to be within the second performance indicator range.

7. The method according to any one of claims 1 to 5, wherein the method further comprises:
receiving, by the network management service production network element, third service indication information from the network management service consumption network element, wherein the third service indication information indicates a second network object of the network management service intent;
determining, by the network management service production network element, that after the first target management action group is applied to the first network object, the duration in which the performance indicator value of the first network object is not within the first performance indicator range is greater than the first tolerable unfulfilled duration; and
determining, by the network management service production network element, a third target management action group based on the third service indication information, to execute the network management service intent, wherein during a period in which the third target management action group is applied to the second network object, the third target management action group is used to enable a performance indicator value of the second network object to be within the first performance indicator range.

8. The method according to claim 6 or 7, wherein the method further comprises:
sending, by the network management service production network element, timeout indication information to the network management service consumption network element, wherein the timeout indication information indicates that after the first target management action group is applied to the first network object, the duration in which the performance indicator value of the first network object is not within the first performance indicator range is greater than the first tolerable unfulfilled duration.

9. The method according to any one of claims 1 to 5, wherein the method further comprises:
sending, by the network management service production network element, first feedback information to the network management service consumption network element, wherein after the first target management action group is applied to the first network object, the first feedback information indicates at least one of the following:
the duration in which the performance indicator value of the first network object is not within the first performance indicator range,
whether the performance indicator value of the first network object reaches the first performance indicator range, and
the performance indicator value of the first network object.

10. The method according to any one of claims 4 to 9, wherein the method further comprises:
sending, by the network management service production network element, second feedback information to the network management service consumption network element, wherein the second feedback information indicates at least one of the following:
the effectiveness consumption duration corresponding to each candidate management action group in the plurality of candidate management action groups, and
the effectiveness gain corresponding to each candidate management action group in the plurality of candidate management action groups.

11. The method according to claim 9 or 10, wherein the method further comprises:
receiving, by the network management service production network element, change indication information from the network management service consumption network element, wherein the change indication information indicates to change the first tolerable unfulfilled duration to second tolerable unfulfilled duration, and the second tolerable unfulfilled duration is determined based on the first feedback information.

12. The method according to claim 11, wherein the method further comprises:
determining, by the network management service production network element, a fourth target management action group based on the second tolerable unfulfilled duration, wherein during a period in which the fourth target management action group is applied to the first network object, the fourth target management action group is used to enable the duration in which the performance indicator value of the first network object is not within the first performance indicator range to be less than or equal to the second tolerable unfulfilled duration.

13. The method according to any one of claims 1 to 12, wherein before the receiving, by a network management service production network element, first service indication information from a network management service consumption network element, the method further comprises:
receiving, by the network management service production network element, a detection request message from the network management service consumption network element.

14. The method according to claim 13, wherein the method further comprises:
sending, by the network management service production network element, a detection response message to the network management service consumption network element, wherein the detection response message comprises at least one of the following information: information indicating the effectiveness consumption duration corresponding to each candidate management action group in the plurality of candidate management action groups, information indicating the effectiveness gain corresponding to each candidate management action group in the plurality of candidate management action groups, information indicating estimated duration consumed for the performance indicator value of the first network object to reach the first performance indicator range, and information indicating whether the performance indicator value of the first network object can reach the first performance indicator range within detection duration in the detection request message.

15. The method according to any one of claims 6 to 14, wherein the method further comprises:
sending, by the network management service production network element, fulfillment information to the network management service consumption network element, wherein the fulfillment information indicates at least one of the following:
whether the performance indicator value of the first network object reaches the second performance indicator range, and
whether the performance indicator value of the second network object reaches the first performance indicator range.

16. A network management service intent execution method, wherein the method comprises:
generating, by a network management service consumption network element, first service indication information, wherein the first service indication information indicates a first network object, a first performance indicator range, and first tolerable unfulfilled duration for a network management service intent, wherein the first tolerable unfulfilled duration is duration that is tolerable to the network management service consumption network element and in which a performance indicator value of the first network object is not within the first performance indicator range during a period in which the network management service intent is applied to the first network object; and
sending, by the network management service consumption network element, the first service indication information to a network management service production network element.

17. The method according to claim 16, wherein the method further comprises:
sending, by the network management service consumption network element, second service indication information to the network management service production network element, wherein the second service indication information indicates a second performance indicator range of the network management service intent, and the second performance indicator range is a range that is of the performance indicator value of the first network object and that is tolerable to the network management service consumption network element when the performance indicator value of the first network object is not within the first performance indicator range.

18. The method according to claim 16 or 17, wherein the method further comprises:
sending, by the network management service consumption network element, third service indication information to the network management service production network element, wherein the third service indication information indicates a second network object of the network management service intent, and the second network object is a network object whose performance indicator value is within the first performance indicator range and that is determined by the network management service consumption network element when the performance indicator value of the first network object is not within the first performance indicator range.

19. The method according to claim 17 or 18, wherein the method further comprises:
receiving, by the network management service consumption network element, timeout indication information from the network management service production network element, wherein the timeout indication information indicates that after a first target management action group is applied to the first network object, the duration in which the performance indicator value of the first network object is not within the first performance indicator range is greater than or equal to the first tolerable unfulfilled duration, and the first target management action group is determined based on the first service indication information; and
the sending, by the network management service consumption network element, second service indication information to the network management service production network element comprises: sending, by the network management service consumption network element, the second service indication information to the network management service production network element in response to the timeout indication information; and/or
the sending, by the network management service consumption network element, third service indication information to the network management service production network element comprises: sending, by the network management service consumption network element, the third service indication information to the network management service production network element in response to the timeout indication information.

20. The method according to any one of claims 16 to 19, wherein the method further comprises:
receiving, by the network management service consumption network element, first feedback information from the network management service production network element, wherein after a first target management action group is applied to the first network object, the first feedback information indicates at least one of the following: the duration in which the performance indicator value of the first network object is not within the first performance indicator range, the performance indicator value of the first network object, and whether the performance indicator value of the first network object reaches the first performance indicator range, wherein the first target management action group is determined based on the first service indication information.

21. The method according to any one of claims 16 to 20, wherein the method further comprises:
receiving, by the network management service consumption network element, second feedback information from the network management service production network element, wherein the second feedback information indicates at least one of the following: effectiveness consumption duration corresponding to each candidate management action group in a plurality of candidate management action groups used to implement the network management service intent, and an effectiveness gain corresponding to each candidate management action group in the plurality of candidate management action groups, wherein the effectiveness consumption duration is duration consumed by a corresponding candidate management action group to take effect after the corresponding candidate management action group is applied to the first network object, and the effectiveness gain is a change that is of the performance indicator value and that is generated after the corresponding candidate management action group is applied to the first network object.

22. The method according to claim 20 or 21, wherein the method further comprises:
determining, by the network management service consumption network element, second tolerable unfulfilled duration based on the first feedback information; and
sending, by the network management service consumption network element, change indication information to the production network element, wherein the change indication information indicates that the first tolerable unfulfilled duration is changed to the second tolerable unfulfilled duration.

23. The method according to any one of claims 16 to 22, wherein the method further comprises:
sending, by the network management service consumption network element, a detection request message to the network management service production network element; and
receiving, by the network management service consumption network element, a detection response message from the network management service production network element, wherein the detection response message comprises at least one of the following information: information indicating the effectiveness consumption duration corresponding to each candidate management action group in the plurality of candidate management action groups used to implement the network management service intent, information indicating the effectiveness gain corresponding to each candidate management action group in the plurality of candidate management action groups, information indicating estimated duration consumed for the performance indicator value of the first network object to reach the first performance indicator range, and information indicating whether the performance indicator value of the first network object can reach the first performance indicator range within detection duration in the detection request message; and
the generating, by a network management service consumption network element, first service indication information comprises:
generating, by the network management service consumption network element, the first service indication information based on the detection response message.

24. The method according to any one of claims 16 to 23, wherein the method further comprises:
receiving, by the consumption network element, fulfillment information from the production network element, wherein the fulfillment information indicates at least one of the following fulfillment results: whether the performance indicator value of the first network object reaches the second performance indicator range, and whether a performance indicator value of the second network object reaches the first performance indicator range.

25. A network management service intent execution method, wherein the method comprises:
generating, by a network management service consumption network element, first service indication information, wherein the first service indication information indicates a first network object, a first performance indicator range, and first tolerable unfulfilled duration for a network management service intent;
sending, by the network management service consumption network element, the first service indication information to a network management service production network element, and receiving, by the network management service production network element, the first service indication information from the network management service consumption network element; and
determining, by the network management service production network element, a first target management action group based on the first service indication information, to execute the network management service intent, wherein during a period in which the first target management action group is applied to the first network object, the first target management action group is used to enable duration in which a performance indicator value of the first network object is not within the first performance indicator range to be less than or equal to the first tolerable unfulfilled duration.

26. The method according to claim 25, wherein the method comprises:
sending, by the network management service consumption network element, second service indication information to the network management service production network element, and receiving, by the network management service production network element, the second service indication information from the network management service consumption network element, wherein the second service indication information indicates a second performance indicator range of the network management service intent;
determining, by the network management service production network element, that the duration in which the performance indicator value of the first network object is not within the first performance indicator range is greater than the first tolerable unfulfilled duration; and
determining, by the network management service production network element, a second target management action group based on the second service indication information, wherein during a period in which the second target management action group is applied to the first network object, the second target management action group is used to enable the performance indicator value of the first network object to be within the second performance indicator range.

27. The method according to claim 25 or 26, wherein the method further comprises:
sending, by the network management service consumption network element, third service indication information to the network management service production network element, and receiving, by the network management service production network element, the third service indication information from the network management service consumption network element, wherein the third service indication information indicates a second network object of the network management service intent;
determining, by the network management service production network element, that the duration in which the performance indicator value of the first network object is not within the first performance indicator range is greater than the first tolerable unfulfilled duration; and
determining, by the network management service production network element, a third target management action group based on the third service indication information, to execute the network management service intent, wherein during a period in which the third target management action group is applied to the second network object, the third target management action group is used to enable a performance indicator value of the second network object to be within the first performance indicator range.

28. The method according to claim 26 or 27, wherein the method further comprises:
sending, by the network management service production network element, timeout indication information to the network management service consumption network element, and receiving, by the network management service consumption network element, the timeout indication information from the network management service production network element, wherein the timeout indication information indicates that the duration in which the performance indicator value of the first network object is not within the first performance indicator range is greater than or equal to the first tolerable unfulfilled duration; and
the sending, by the network management service consumption network element, second service indication information to the network management service production network element comprises: sending, by the network management service consumption network element, the second service indication information to the network management service production network element in response to the timeout indication information; and/or
the sending, by the network management service consumption network element, third service indication information to the network management service production network element comprises: sending, by the network management service consumption network element, the third service indication information to the network management service production network element in response to the timeout indication information.

29. The method according to any one of claims 26 to 28, wherein the method comprises:
sending, by the network management service production network element, first feedback information to the network management service consumption network element, and receiving, by the management service consumption network element, the first feedback information from the network management service production network element, wherein after the first target management action group is applied to the first network object, the first feedback information indicates at least one of the following: the duration in which the performance indicator value of the first network object is not within the first performance indicator range, the performance indicator value of the first network object, and whether the performance indicator value of the first network object reaches the first performance indicator range;
determining, by the network management service consumption network element, second tolerable unfulfilled duration based on the first feedback information;
sending, by the network management service consumption network element, change indication information to the network management service production network element, and receiving, by the network management service production network element, the change indication information from the network management service consumption network element, wherein the change indication information indicates that the first tolerable unfulfilled duration is changed to the second tolerable unfulfilled duration; and
determining, by the network management service production network element, a fourth target management action group based on the second tolerable unfulfilled duration, wherein during a period in which the fourth target management action group is applied to the first network object, the fourth target management action group is used to enable the duration in which the performance indicator value of the first network object is not within the first performance indicator range to be less than or equal to the second tolerable unfulfilled duration.

30. The method according to any one of claims 25 to 29, wherein the method comprises:
sending, by the network management service consumption network element, a detection request message to the network management service production network element, and receiving, by the network management service production network element, the detection request message from the network management service consumption network element; and
sending, by the network management service production network element, a detection response message to the network management service consumption network element, and receiving, by the network management service consumption network element, the detection request message from the network management service production network element, wherein the detection response message comprises at least one of the following information: information indicating effectiveness consumption duration corresponding to each candidate management action group in a plurality of candidate management action groups, information indicating an effectiveness gain corresponding to each candidate management action group in the plurality of candidate management action groups, information indicating estimated duration consumed for the performance indicator value of the first network object to reach the first performance indicator range, and information indicating whether the performance indicator value of the first network object can reach the first performance indicator range within detection duration in the detection request message; and
the generating, by a network management service consumption network element, first service indication information comprises:
generating, by the network management service consumption network element, the first service indication information based on the detection response message.

31. The method according to any one of claims 25 to 30, wherein the method further comprises:
sending, by the network management service production network element, fulfillment information to the network management service consumption network element, and receiving, by the network management service consumption network element, the fulfillment information from the network management service production network element, wherein the fulfillment information indicates at least one of the following fulfillment results: whether the performance indicator value of the first network object reaches the second performance indicator range, and whether the performance indicator value of the second network object reaches the first performance indicator range.

32. A communication apparatus, comprising a module configured to perform the method according to any one of claims 1 to 15, or a module configured to perform the method according to any one of claims 16 to 24.

33. A communication apparatus, comprising at least one processor, wherein the at least one processor is configured to execute a computer program stored in a memory, to enable the apparatus to implement the method according to any one of claims 1 to 15 or the method according to any one of claims 16 to 24.

34. A communication apparatus, comprising at least one processor, wherein the at least one processor is coupled to at least one memory, and the at least one processor is configured to execute a computer program or instructions stored in the at least one memory, to enable the method according to any one of claims 1 to 15 to be performed, or the method according to any one of claims 16 to 24 to be performed.

35. A computer-readable storage medium, comprising a computer program, wherein when the computer program is run on a computer, the computer is enabled to perform the method according to any one of claims 1 to 15 or the method according to any one of claims 16 to 24.

36. A computer program product, comprising instructions, wherein when the instructions are run on a computer, the computer is enabled to perform the method according to any one of claims 1 to 15 or the method according to any one of claims 16 to 24.

37. A communication system, comprising an apparatus configured to perform the method according to any one of claims 1 to 15 and an apparatus configured to perform the method according to any one of claims 16 to 24.
